(19) 

Europäisches
Patentamt
European
Patent Office
Office européen
des brevets

(11) **EP 2 813 689 A1**

(12) # EUROPEAN PATENT APPLICATION
published in accordance with Art. 153(4) EPC

(43) Date of publication:
**17.12.2014 Bulletin 2014/51**

(21) Application number: **12868133.5**

(22) Date of filing: **09.02.2012**

(51) Int Cl.:
*F02D 19/06* (2006.01)

(86) International application number:
**PCT/JP2012/052983**

(87) International publication number:
**WO 2013/118276 (15.08.2013 Gazette 2013/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Toyota Jidosha Kabushiki Kaisha
Toyota-shi, Aichi 471-8571 (JP)**

(72) Inventors:
- **MASUBUCHI, Masahiko
Toyota-shi
Aichi 471-8571 (JP)**

- **TANIGUCHI, Satoshi
Toyota-shi
Aichi 471-8571 (JP)**
- **SUGIYAMA, Kouseki
Toyota-shi
Aichi 471-8571 (JP)**
- **ETO, Hiroshi
Obu-shi
Aichi 474-8588 (JP)**

(74) Representative: **Intès, Didier Gérard André et al
Cabinet Beau de Loménie
158, rue de l'Université
75340 Paris Cedex 07 (FR)**

(54) **CONTROL SYSTEM FOR MULTIFUEL INTERNAL COMBUSTION ENGINE**

(57)     An object of the present invention is to reduce the difference between the torque generated by an internal combustion engine and a required torque in a control system for a multifuel internal combustion engine that can use CNG and liquid fuel. To achieve the object, the control system for an internal combustion engine according to the present invention causes the internal combustion engine to operate in a first operation mode in which only CNG is used, when the required torque of the internal combustion engine is equal to or lower than a threshold and to operate in a second operation mode in which at least liquid fuel among CNG and liquid fuel is used, when the required torque of the internal combustion engine is higher than the threshold and changes the magnitude of the threshold in conjunction with the concentration of inert gases contained in CNG.

**FIG.7**

**Description**

**[TECHNICAL FIELD]**

The present invention relates to a technology for controlling a multifuel internal combustion engine that can use compressed natural gas (CNG) and liquid fuel.

**[BACKGROUND ART]**

There has been known a technology pertaining to a multifuel internal combustion engine capable of using CNG and liquid fuel in which the engine is adapted to operate using CNG when the load is low and to operate using liquid fuel when the load is high (see, for example, patent document 1).

**[PRIOR ART DOCUMENTS]**

**[PATENT DOCUMENTS]**

Patent Document 1: Japanese Patent Application Laid-Open No. 2006-342689

**[SUMMARY OF THE INVENTION]**

**[PROBLEMS TO BE SOLVED BY THE INVENTION]**

Properties of CNG used as fuel in internal combustion engines are not necessarily uniform. In particular the quantity (concentration) of inert gases (e.g. carbon dioxide $CO_2$ and nitride $N_2$) contained in CNG may vary largely from one CNG supply site to another.
If the inert gas concentration in CNG changes, the amount of heat generated by combustion of CNG changes. For example, the amount of heat is smaller when the inert gas concentration in CNG is high than when it is low. For this reason, if a condition for switching between CNG and liquid fuel is set without regard to the inert gas concentration in CNG, there is a possibility that the torque generated by the internal combustion engine may become different from a required torque.
The present invention has been made in view of the above-described circumstances, and its object is to provide a technology pertaining to a control system for a multifuel internal combustion engine capable of using CNG and liquid fuel by which the difference between the torque generated by the internal combustion engine and a required torque can be reduced.

**[MEANS FOR SOLVING THE PROBLEMS]**

To achieve the above object, a control system for a multifuel internal combustion engine according to the present invention, which controls switching between a first operation mode in which the internal combustion engine operates using only compressed natural gas (CNG) and a second operation mode in which the internal combustion engine operates using at least liquid fuel among CNG and liquid fuel, is adapted to change a condition for switching between the first operation mode and the second operation mode in conjunction with the inert gas concentration in CNG.
Specifically, a control system for a multifuel internal combustion engine according to the present invention, which controls switching between a first operation mode in which the internal combustion engine operates using only CNG and a second operation mode in which the internal combustion engine operates using at least liquid fuel among CNG and liquid fuel, comprises:

determination means for determining the concentration of inert gases contained in CNG; and
changing means for changing a condition for switching between said first operation mode and said second operation mode in conjunction with the concentration of inert gases determined by said determination means.

The maximum torque that an internal combustion engine can generate when the internal combustion engine operates using only CNG (which will be hereinafter referred to as the "first maximum torque") tends to be lower than the maximum torque that the internal combustion engine can generate when the internal combustion engine operates using only the liquid fuel or both liquid fuel and CNG (which will be hereinafter referred to as the "second maximum torque"). This tendency is particularly strong in the case where CNG is injected into an intake passage (e.g. intake port) of the internal combustion engine.

In view of the above, there has been developed a method according to which the internal combustion engine is caused to operate using only CNG when the required torque of the internal combustion engine is equal to or lower than the first maximum torque and to operate using at least liquid fuel among CNG and liquid fuel when the required torque of the internal combustion engine is higher than the first maximum torque.

However, properties of CNG are not necessarily uniform but may vary from one CNG supply site (filling site) to another. If CNG is supplied to the fuel tank (for filling), the CNG remaining in the fuel tank (which will be hereinafter referred to as the "remaining CNG") and the CNG supplied for filling (which will be hereinafter referred to as the "filling CNG") are mixed. In cases where the properties of the filling CNG and the properties of the remaining CNG are different, the properties of the CNG supplied from the fuel tank to the internal combustion engine after filling with the filling CNG (i.e. CNG as a mixture of the filling CNG and the remaining CNG, which will be hereinafter referred to as the "mixed CNG") are different from the properties of the remaining CNG.

Effects of a change in the properties of CNG on the operation state of the internal combustion engine include a change in the theoretical air-fuel ratio and a change in the Wobbe index (defined as the gross heating value of CNG divided by the square root of the specific gravity of CNG). Specifically, when the concentration of inert gases (such as carbon dioxide $CO_2$ and nitrogen $N_2$) contained in CNG is high, the air-fuel ratio (theoretical air-fuel ratio) at which CNG and oxygen in the air-fuel mixture react without excess or deficiency and the Wobbe index are lower than when the concentration of inert gases in CNG is low.

The first maximum torque is lower when the Wobbe index of CNG is low (or when the inert gas concentration is high) than when the Wobbe index is high (or when the inert gas concentration is low). Therefore, if a condition for switching between the first operation mode and the second operation mode is set without regard to the inert gas concentration in CNG, there is a possibility that the torque generated by the internal combustion engine may depart from the required torque.

For example, if switching between the first operation mode and the second operation mode is effected when the inert gas concentration in CNG is high according to a condition for switching the same as that used when the inert gas concentration is low, the torque generated in the first operation mode may be lower than the required torque. In consequence, there is a possibility that the torque generated by the internal combustion engine may increase abruptly upon switching from the first operation mode to the second operation mode. Moreover, there is a possibility that the torque generated by the internal combustion engine may decrease abruptly upon switching from the second operation mode to the first operation mode. A change in the torque generated by the internal combustion engine upon switching between the first operation mode and the second operation mode may cause the driver to feel uncomfortable or deteriorate the drivability of the vehicle.

On the other hand, if switching between the first operation mode and the second operation mode is effected when the inert gas concentration in CNG is low according to a condition for switching the same as that used when the inert gas concentration is high, there is a possibility that the operation range in which the internal combustion engine is caused to operate in the first driving mode may be narrowed. For example, there is a possibility that switching from the first operation mode to the second operation mode may be effected or switching from the second operation mode to the first operation mode may not be effected, while the required torque of the internal combustion engine is equal to or lower than the first maximum torque.

The control system for a multifuel internal combustion engine according to the present invention is adapted to change the condition for switching between the first operation mode and the second operation mode in conjunction with the inert gas concentration in CNG. Therefore, it is possible to reduce the difference between the torque generated by the internal combustion engine and the required torque. Moreover, it is also possible to enlarge the operation range in which the first operation mode is used.

As a condition for switching between the first operation mode and the second operation mode, the result of determination as to whether the required torque of the internal combustion engine is equal to or lower than a threshold may be employed. For example, the internal combustion engine may be caused to operate in the first operation mode when the required torque of the internal combustion engine is equal to or lower than the threshold and to operate in the second operation mode when the required torque of the internal combustion engine is higher than the threshold.

In this case, the changing means may make the aforementioned threshold lower when the inert gas concentration determined by the determination means is high than when it is low. If the threshold is changed in this way, a situation in which the internal combustion engine is caused to operate in the first operation mode when the required torque of the internal combustion engine is higher than the first maximum torque can be prevented from occurring. In consequence abrupt increase in the torque generated by the internal combustion engine upon switching from the first operation mode to the second operation mode and abrupt decrease in the torque generated by the internal combustion engine upon switching from the second operation mode to the first operation mode can be prevented from occurring. Furthermore, a situation in which the internal combustion engine is caused to operate in the second operation mode when the required torque of the internal combustion engine is lower than the first maximum torque can also be prevented from occurring. Therefore, a reduction in the difference between the torque generated by the internal combustion engine and the required torque and an enlargement of the operation range in which the internal combustion engine is caused to operate in the first operation mode can be achieved.

In the control system for a multifuel internal combustion engine according to the present invention, a first threshold to be compared with the required torque of the internal combustion engine when the operation mode is to be switched from the first operation mode to the second operation mode and a second threshold to be compared with the required torque of the internal combustion engine when the operation mode is to be switched from the second operation mode to the first operation mode may be set as the aforementioned threshold. In this case, it is preferred that the value of the first threshold be set larger than the second threshold. In other words, it is preferred that a hysteretic difference be set between the first threshold and the second threshold.

If switching from the first operation mode to the second operation mode and switching from the second operation mode to the first operation mode are effected using the same threshold, there is a possibility that switching between the first operation mode and the second operation mode may occur frequently if the required torque of the internal combustion engine fluctuates in the neighborhood of the threshold. In such cases, there is a possibility that the actual operation state of the internal combustion engine cannot follow the control of switching between the first operation mode and the second operation mode.

If the threshold (first threshold) used in controlling switching from the first operation mode to the second operation mode and the threshold (second threshold) used in controlling switching from the second operation mode to the first operation mode are set to have different values, frequent switching between the first operation mode and the second operation mode can be prevented from occurring. In consequence, a situation in which the actual operation state of the internal combustion engine cannot follow the control of switching between the first operation mode and the second operation mode can be prevented from occurring.

The control system for a multifuel internal combustion engine according to the present invention may further comprise control means for performing air-fuel ratio feedback control to correct a fuel injection quantity on the basis of a difference between the air-fuel ratio of air-fuel mixture burned in the internal combustion engine and a target air-fuel ratio when the internal combustion engine is operating in the first operation mode. In this case, the determination means may calculate the concentration of inert gases contained in CNG using the magnitude of a correction value used in the air-fuel ratio feedback control as a parameter.

A change in the properties of CNG or a change in the inert gas concentration in CNG affects the correction value used in the air-fuel ratio feedback control. Specifically, a change in the air-fuel ratio due to a change in the properties of CNG causes a change in the oxygen concentration in the exhaust gas. In the internal combustion engine in which the air-fuel ratio feedback control is performed based on measurement values of an oxygen concentration sensor and an air-fuel ratio sensor, a change in the properties (or inert gas concentration) of CNG with supply of CNG leads to changes in measurement values of the oxygen concentration sensor and the air-fuel ratio sensor and also leads to a change in the correction value in the air-fuel ratio feedback control consequently.

For example, in the case a CNG having an inert gas concentration higher than the remaining CNG is supplied, the inert gas concentration in the mixed CNG becomes higher than the inert gas concentration in the remaining CNG. In this case, the theoretical air-fuel ratio of the mixed CNG is lower than the theoretical air-fuel ratio of the remaining CNG. Consequently, the air-fuel ratio determined based on measurement values of the oxygen concentration sensor and the air-fuel ratio sensor shifts to an air-fuel ratio leaner than the target air-fuel ratio.

On the other hand, in the case where a CNG having an inert gas concentration lower than the remaining CNG is supplied, the inert gas concentration in the mixed CNG becomes lower than the inert gas concentration in the remaining CNG. In this case, the theoretical air-fuel ratio of the mixed CNG is higher than the theoretical air-fuel ratio of the remaining CNG. Consequently, the air-fuel ratio determined based on measurement values of the oxygen concentration sensor and the air-fuel ratio sensor shifts to an air-fuel ratio richer than the target air-fuel ratio.

Therefore, the magnitude of the correction value used in the air-fuel ratio feedback control correlates with the inert gas concentration in CNG. Therefore, the inert gas concentration in CNG can be calculated using the magnitude of the correction value as a parameter.

The control system for a multifuel internal combustion engine according to the present invention may further comprise a fuel tank that stores CNG, a fuel injection valve that injects CNG into an intake passage or a cylinder, a regulator that is arranged in the middle of a fuel supply passage used to supply CNG to the fuel injection valve from the fuel tank to adjust the channel cross sectional area of the fuel supply passage in such a way as to make the pressure of CNG supplied to the fuel injection valve equal to a set pressure, and measuring means for measuring the channel cross sectional area adjusted by the regulator when injection of CNG by the fuel injection valve is performed. In this case, the determination means may calculate the concentration of inert gases contained in CNG using the channel cross sectional area measured by the measuring means as a parameter.

When the internal combustion engine is operating in the first operation mode (namely when CNG is injected through the fuel injection valve), the channel cross sectional area adjusted by the regulator (that is, the degree of opening of the regulator) correlates with the inert gas concentration in CNG. Specifically, when CNG is injected through the fuel injection valve, the channel cross sectional area adjusted by the regulator is substantially constant in a stable manner, and the channel cross sectional are is larger when the inert gas concentration in CNG is high than when it is low.

It is considered that the reason for this is that the density of CNG is higher when the inert gas concentration in CNG is high than when it is low. Specifically, when the degree of opening of the regulator is constant, the higher the density of CNG is, the lower the volume flow rate of CNG flowing through the regulator is. Consequently, if the pressure of CNG supplied to the fuel injection valve is constant, the higher the density of CNG is (namely, the higher the inert gas concentration in CNG is), the larger the degree of opening of the regulator (or the channel cross sectional area adjusted by the regulator) is.

Therefore, it is possible to calculate the inert gas concentration in CNG using as a parameter the degree of opening of the regulator when CNG is injected through the fuel injection valve.

The control system for a multifuel internal combustion engine according to the present invention may further comprise a fuel tank that stores CNG, a fuel injection valve that injects CNG into an intake passage or a cylinder, and a regulator that is arranged in the middle of a fuel supply passage used to supply CNG to the fuel injection valve from the fuel tank and has a valve member that changes the channel cross sectional area of the fuel supply passage in such a way as to make the pressure of CNG supplied to the fuel injection valve equal to a set pressure. In this case, the determination means may calculate the concentration of inert gases contained in CNG on the basis of the length of a time period over which the opening degree of the valve member of the regulator decreases from a first predetermined opening degree to a second predetermined opening degree or a parameter correlating with the length of this time period.

When the pressure of CNG supplied to the fuel injection vale is lower than the set pressure, the valve member of the regulator opens. Then, CNG is supplied to the fuel injection valve from the fuel tank. Consequently, the pressure of CNG supplied to the fuel injection valve rises. When the pressure of CNG supplied to the fuel injection valve rises to become equal to or higher than the set pressure, the valve member of the regulator closes. The valve member of the regulator operates in the above-described opening and closing manners repeatedly, so that the pressure of CNG supplied to the fuel injection valve is adjusted (lowered) to the set pressure.

As described above, the density of CNG is higher when the inert gas concentration in CNG is high than when it is low. Therefore, when the degree of opening of the regulator is constant, the higher the density of CNG is, the lower the volume flow rate of CNG flowing through the regulator is. In consequence, when the density of CNG supplied to the fuel injection valve through the regulator is higher, it takes longer time for the opening degree of the valve member of the regulator to decrease from the first predetermined opening degree to the second predetermined opening degree as the valve member operates in the closing manner. In other words, the higher the density of CNG is, the lower the closing speed of the valve member is, when the opening degree of the valve member decreases from the first predetermined opening degree to the second predetermined opening degree. The first and second predetermined opening degrees mentioned above are opening degrees equal to or smaller than the opening degree in the fully open state and larger than the opening degree in the fully closed state. The second predetermined opening degree is smaller than the first predetermined opening degree.

Therefore, the concentration of inert gases contained in CNG can be calculated based on the length of the period over which the opening degree of the valve member of the regulator decreases from the first predetermined opening degree to the second predetermined opening degree or a parameter correlating with the length of this period.

The control system for a multifuel internal combustion engine according to the present invention may further comprise a fuel tank for storing CNG, a filler port that is opened when CNG is supplied to the fuel tank, a pressure sensor that measures the pressure in the fuel tank, and a calculation unit that calculates, when new CNG is supplied to the fuel tank, the concentration of inert gases contained in the CNG newly supplied to the fuel tank using a change in the pressure measured by the pressure sensor and the channel cross sectional area of a fuel passage from the filler port to the fuel tank as parameters. In this case, the determination means may calculate the concentration of inert gases contained in mixed fuel as a mixture of the CNG remaining in the fuel tank and the CNG newly supplied to the fuel tank using as parameters the quantity of CNG remaining in the fuel tank at the time when the new CNG is supplied to the fuel tank, the inert gas concentration in the CNG remaining in the fuel tank, the quantity of the CNG newly supplied to the fuel tank, and the inert gas concentration in the CNG newly supplied to the fuel tank.

The inert gas concentration in CNG correlates with the gas constant of CNG. The gas constant of the CNG correlates with the speed of CNG (sonic speed) during filling. The speed of CNG during filling correlates with the ratio of the quantity of CNG supplied for filling per unit time (i.e. the flow rate of CNG) and the channel cross sectional area of the fuel passage. The quantity of CNG supplied for filling per unit time correlates with the rise in the pressure in the fuel tank per unit time. Therefore, the gas constant of CNG can be calculated using the change in the value measured by the pressure sensor per unit time and the channel cross sectional area of the fuel passage as parameters. Thus, the inert gas concentration in the filling CNG can be calculated using the gas constant of the filling CNG as a parameter.

If the inert gas concentration in the filling CNG is determined, the inert gas concentration in the mixed CNG can be calculated using the quantity of the filling CNG, the quantity of the remaining CNG, and the inert gas concentration in the remaining CNG as parameters.

[ADVANTAGEOUS EFFECT OF THE INVENTION]

The present invention provides a technology with which the difference between the torque generated by an internal combustion engine and a required torque can be reduced in a control system for a multifuel internal combustion engine that can use CNG and liquid fuel.

[BRIEF DESCRIPTION OF THE DRAWINGS]

Fig. 1 is a diagram showing the general construction of an internal combustion engine to which the present invention is applied.
Fig. 2 is a graph showing a relationship between the first maximum torque and the second maximum torque.
Fig. 3 is a graph showing a relationship between the inert gas concentration in CNG and the amount of heat generated by combustion of CNG.
Fig. 4 is a graph showing a relationship between the inert gas concentration in CNG and the theoretical air-fuel ratio of CNG.
Fig. 5 is a graph showing a relationship between an inert gas concentration learned value eknco2 and the inert gas concentration in CNG.
Fig. 6 is a flow chart of a fuel injection quantity calculation routine.
Fig. 7 is a graph showing a relationship between the inert gas concentration in CNG and threshold values.
Fig. 8 shows a relationship between a first threshold and a second threshold.
Fig. 9 is a flow chart of an operation mode switching control routine.
Fig. 10 is a diagram showing the general construction of a regulator.
Fig. 11 is a diagram showing the regulator in the fully closed state.
Fig. 12 is a graph illustrating the operation of the regulator before and after the start of the internal combustion engine.
Fig. 13 is a graph showing a relationship between the inert gas concentration in CNG and an intermediate opening degree $\theta$ of the regulator under a condition that the pressure in a decompression chamber and the downstream fuel supply pipe is constant.
Fig. 14 is a graph showing a relationship between the upstream pressure and the intermediate opening degree $\theta$ of the regulator under a condition that the inert gas concentration in CNG and the pressure in the decompression chamber are constant.
Fig. 15 is a graph showing a relationship between the inert gas concentration in CNG and the fuel density.
Fig. 16 is a graph showing a relationship between the inert gas concentration in CNG and the valve open period.
Fig. 17 is a graph showing a relationship between the upstream pressure and the valve open period of the regulator under a condition that the inert gas concentration in CNG is constant.
Fig. 18 is a flow chart of a processing routine for calculating the inert gas concentration in filling CNG.
Fig. 19 is a flow chart of a processing routine for calculating the inert gas concentration in mixed CNG.

[EMBODIMENTS FOR CARRYING OUT THE INVENTION]

In the following, specific embodiments of the present invention will be described with reference to the drawings. The dimensions, materials, shapes, relative arrangements, and other features of the components that will be described in connection with the embodiments are not intended to limit the technical scope of the present invention only to them, unless particularly stated.

<Embodiment 1>

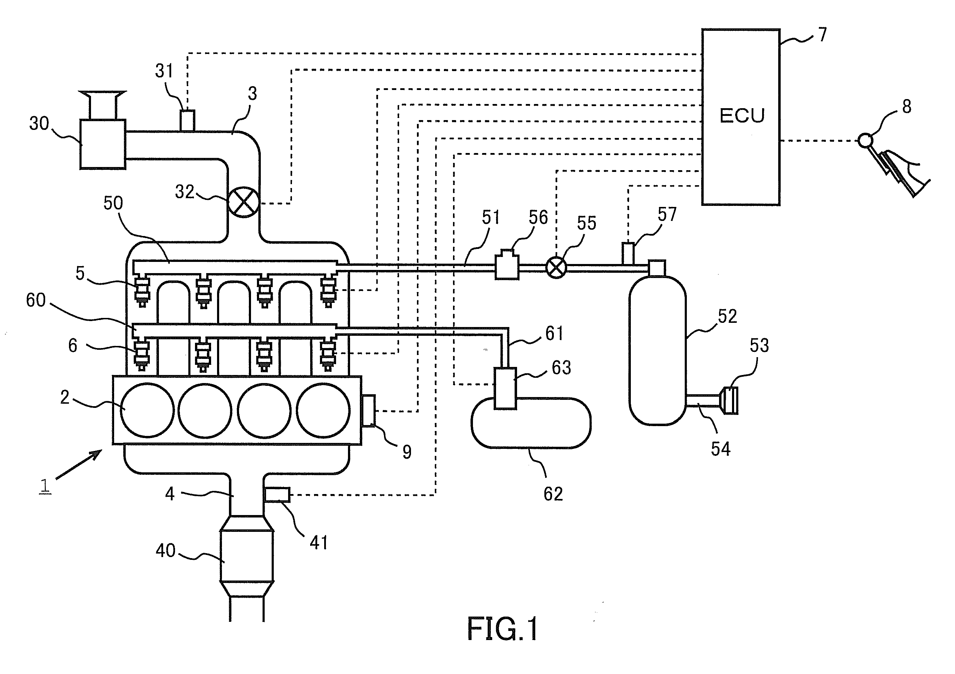

A first embodiment of the present invention will be described with reference to Figs. 1 to 9. Fig. 1 is a diagram showing the general construction of an internal combustion engine to which the present invention is applied. The internal combustion engine 1 shown in Fig. 1 is a spark-ignition internal combustion engine having a plurality of cylinders. While the internal combustion engine shown in Fig. 1 has four cylinders, the number of the cylinders may be three or less or five or more.

The internal combustion engine 1 is connected with an intake passage 3 and an exhaust passage 4. The intake passage 3 is a passage used to deliver fresh air taken from the atmosphere to the cylinders 2 of the internal combustion engine 1. The intake passage 3 is provided with an air cleaner 30. The air cleaner 30 is adapted to trap dust in the air. The intake passage 3 is provided with an air flow meter 31 at a location downstream of the air cleaner 30. The air flow meter 31 outputs an electrical signal correlating with the quantity (or mass) of air flowing in the intake passage 3. The intake passage 3 is provided with a throttle valve 32 at a location downstream of the air flow meter 31. The throttle valve 32 varies the quantity of air supplied to the internal combustion engine 1 by varying the channel cross sectional area of the intake passage 3.

The intake passage 3 downstream of the throttle valve 32 forks into four branch pipes, which are connected to the cylinders 2 respectively. To each branch pipe of the intake passage 3 are attached a first fuel injection valve 5 for injecting CNG into the branch pipe and a second fuel injection valve 6 for injecting gasoline (liquid fuel) into the branch pipe.

The first fuel injection valve 5 is connected to a first delivery pipe 50. The first delivery pipe 50 is connected to a first fuel tank 52 via a first fuel passage 51. The first fuel tank 52 is connected with a filler port 53 provided on the body of a vehicle via an inlet pipe 54. The filler port 53 is adapted to open responsive to insertion of a fuel service nozzle in a gas station or the like into it to allow introduction of CNG supplied through the fuel service nozzle into the inlet pipe 54. The CNG introduced into the inlet pipe 54 through the filler port 53 is stored in the first fuel tank 52.

The CNG stored in the first fuel tank 52 is supplied to the first delivery pipe 50 through the first fuel passage 51 and then distributed to the four first fuel injection valves 5 from the first delivery pipe 50. The first fuel passage 51 is provided with a shut-off valve 55. The shut-off valve 55 provides switching between conduction and shut-off of the first fuel passage 51. The shut-off valve 55 is closed while the internal combustion engine 1 is not running (e.g. in the period during which the ignition switch is off) and open while the internal combustion engine 1 is running (e.g. in the period during which the ignition switch is on). As the shut-off valve 55, an electromagnetic valve device that opens with supply of driving power and closes when not supplied with driving power may be employed.

The first fuel passage 51 is provided with a regulator 56 at a location downstream of the shut-off valve 55. The regulator 56 reduces the pressure of CNG supplied from the first fuel tank 52 to a predetermined pressure (set pressure). To put it another way, the regulator 56 is a valve device that adjusts the channel cross sectional area of the first fuel passage 51 in such a way that the fuel pressure in the first fuel passage 51 downstream of the regulator 56 or the fuel pressure acting on the first fuel injection valve 5 and the first delivery pipe 50 (which will be hereinafter referred to as the "fuel injection pressure") is made equal to the set pressure. As the regulator 56, a mechanical valve device using a diaphragm and a spring in combination may be employed.

The first fuel passage 51 is provided with a pressure sensor 57 at a location upstream of the shut-off valve 55. It is preferred that the pressure sensor 57 be arranged at a location as close to the first fuel tank 52 as possible.

The second fuel injection valves 6 are connected to a second delivery pipe 60. The second delivery pipe 60 is connected to a second fuel tank 62 via a second fuel passage 61. The second fuel tank 62 is a tank that stores gasoline. The second fuel passage 61 is provided with a fuel pump 63 for pumping up gasoline stored in the second fuel tank 62. The fuel pump 63 is, for example, a turbine pump driven by an electric motor. The gasoline pumped up by the fuel pump 63 is supplied to the second delivery pipe 60 through the second fuel passage 61 and then distributed to the four second fuel injection valves 6.

The exhaust passage 4 is a passage used to cause burned gas (exhaust gas) discharged from the cylinders 2 to be emitted to the atmosphere after passing through an exhaust gas purification catalyst 40 and a silencer etc. An A/F sensor 41 that outputs an electrical signal correlating with the air-fuel ratio is attached to the exhaust passage 4.

The internal combustion engine 1 having the above-described construction is equipped with an ECU 7. The ECU 7 is an electronic control unit composed of a CPU, a ROM, a RAM, and a backup RAM etc. The ECU 7 is electrically connected with various sensors such as an accelerator position sensor 8 and a crank position sensor 9 in addition to the air flow meter 31, the A/F sensor 41, and the pressure sensor 57 mentioned above. The accelerator position sensor 8 is a sensor that outputs an electrical signal correlating with the operation amount of the accelerator pedal (accelerator opening degree). The crank position sensor 9 is a sensor that outputs an electrical signal correlating with the rotational position of the crankshaft of the internal combustion engine 1.

The ECU 7 is electrically connected with various components such as the first fuel injection valves 5, the second fuel injection valves 6, the shut-off valve 55, and the fuel pump 63. The ECU 7 controls the above-mentioned various components based on signals output from the above-mentioned various sensors.

For instance, the ECU 7 switches the fuel used based on the required torque of the internal combustion engine 1. Specifically, when the required torque of the internal combustion engine 1 is equal to or lower than a threshold, the ECU 7 causes the internal combustion engine to operate using CNG as fuel (first operation mode). On the other hand, when the required torque of the internal combustion engine 1 is higher than the aforementioned threshold, the ECU 7 causes the internal combustion engine 1 to operate using gasoline as fuel (second operation mode) or causes the internal combustion engine 1 to operate using both CNG and gasoline as fuel (third operation mode). The "threshold" mentioned above is a value equal to the maximum torque that the internal combustion engine 1 can generate when the internal combustion engine 1 operates using only CNG (first maximum torque) or a value equal to the first maximum torque minus a margin.

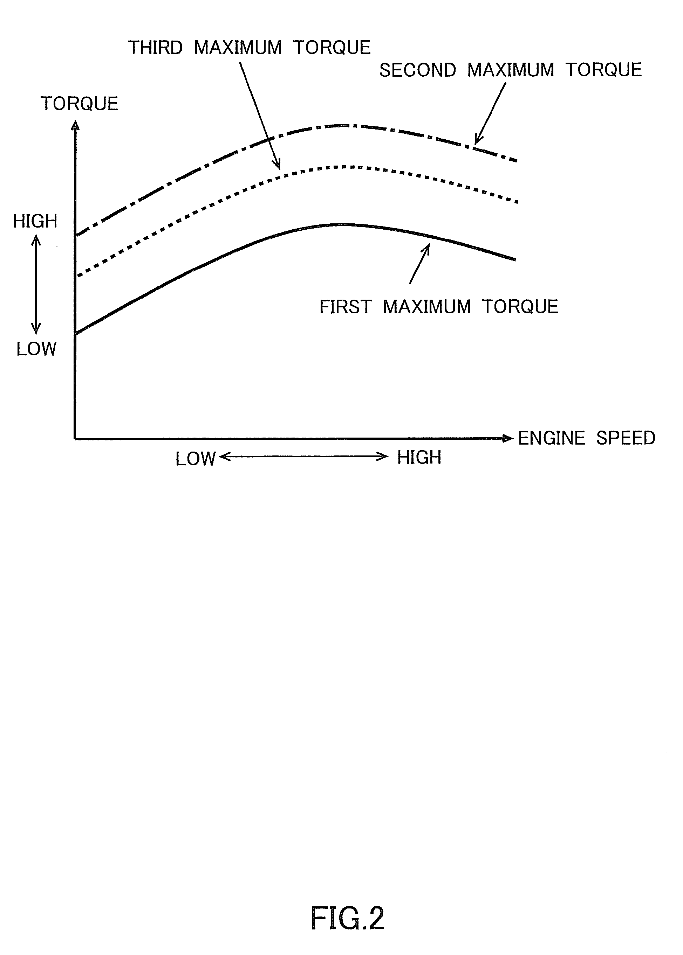

As shown in Fig. 2, the maximum torque that the internal combustion engine 1 can generate when operating using only CNG (the first maximum torque represented by the solid curve in Fig. 2) is lower than the maximum torque that the internal combustion engine 1 can generate when operating using only gasoline (the second maximum torque represented by the dot-and-dash curve in Fig. 2) and the maximum torque that the internal combustion engine 1 can generate when operating using both gasoline and CNG (the third maximum torque represented by the broken curve in Fig. 2). This tendency is particularly strong in the case where CNG is injected into the intake passage of the internal combustion engine 1.

In view of the above fact, the torque actually generated by the internal combustion engine 1 (which will be hereinafter referred to as the "actual torque") can be made equal to a required torque by controlling the internal combustion engine 1 to operate using only CNG when the required torque of the internal combustion engine 1 is not higher than the aforementioned threshold and to operate using at least gasoline among CNG and gasoline when the required torque of the internal combustion engine 1 is higher than the aforementioned threshold.

Properties of the CNG supplied to the first fuel tank 52 are not necessarily uniform but may vary from one CNG supply site (filling site) to another. The amount of thermal energy generated when CNG and oxygen in air-fuel mixture react (in combustion) without excess or deficiency varies depending on properties of the CNG. In particular, different concentrations of inert gases (carbon dioxide $CO_2$ and nitrogen $N_2$) contained in CNG lead to different amounts of thermal energy.

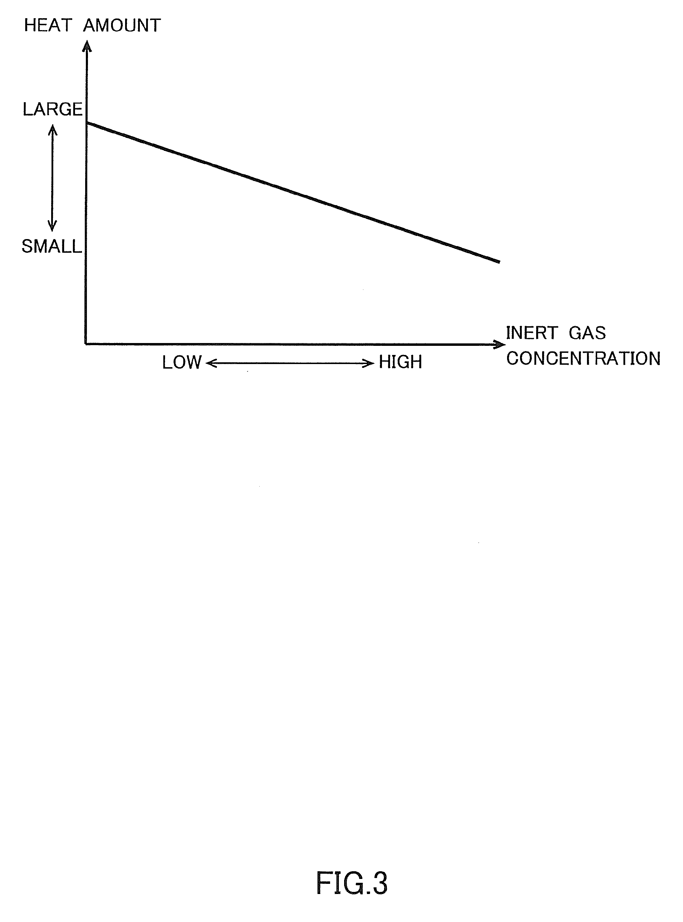

Fig. 3 shows a relationship between the concentration of the inert gases in CNG and the amount of heat generated by combustion of CNG. In Fig. 3, the horizontal axis represents the concentration of inert gases in CNG, and the vertical axis represents the amount of heat generated when CNG is burned. In Fig. 3, the amount of heat generated when CNG and oxygen in air-fuel mixture react without excess or deficiency is smaller when the inert gas concentration in CNG is high than when it is low. In other words, the higher the inert gas concentration in CNG is, the smaller the amount of heat generated when CNG and oxygen in air-fuel mixture react without excess or deficiency is. It is considered that the reason for this is that the higher the inert gas concentration in CNG is, the larger the amount of heat absorbed by the inert gases is.

For this reason, if a CNG (filling CNG) having properties different from the properties of the CNG remaining in the first fuel tank 52 (remaining CNG) is supplied for filling, the first maximum torque with the CNG after filling (mixed CNG) may be different from the first maximum torque with the remaining CNG.

For example, in the case where a filling CNG having an inert gas concentration higher than that of the remaining CNG is supplied for filling, the first maximum torque with the CNG after filling (mixed CNG) is lower than the first maximum torque with the remaining CNG. Therefore, if switching between the first operation mode and the second operation mode or switching between the first operation mode and the third operation mode is effected after filling with the filling CNG on the basis of a threshold suitable for the properties (or the inert gas concentration) of the remaining CNG, there is a possibility that the actual torque may be lower than the required torque or the actual torque may change abruptly at the time of operation mode switching.

Specifically, when the required torque is higher than the first maximum torque with the mixed CNG and equal to or lower than the threshold, the internal combustion engine 1 is controlled to operate using only CNG. Then, the actual torque becomes lower than the required torque. In addition, when switching from the first operation mode to the second operation mode or switching from the first operation mode to the third operation mode is effected, the actual torque increases rapidly. Moreover, when switching from the second operation mode to the first operation mode or switching from the third operation mode to the first operation mode is effected, the actual torque decreases rapidly. In consequence, the driver of the vehicle may feel uncomfortable, or the drivability of the vehicle may be deteriorated.

On the other hand, in the case where a filling CNG having an inert gas concentration lower than that of the remaining CNG is supplied for filling, the first maximum torque with the CNG after filling (mixed CNG) is higher than the first maximum torque with the remaining CNG. Therefore, if switching between the first operation mode and the second operation mode or switching between the third operation mode and the first operation mode is effected after filling with the filling CNG on the basis of a threshold suitable for the properties (or the inert gas concentration) of the remaining CNG, there is a possibility that the operation range in which the internal combustion engine 1 is caused to operate in the first operation mode may be narrowed.

Specifically, if the required torque becomes higher than the threshold while the required torque of the internal combustion engine 1 is not higher than the first maximum torque with the mixed CNG, there is a possibility that switching from the first operation mode to the second operation mode or switching from the first operation mode to the third operation mode may be effected. Moreover, if the required torque becomes higher than the threshold while the required torque of the internal combustion engine 1 is not higher than the first maximum torque with the mixed CNG, there is a possibility that switching from the second operation mode to the first operation mode or switching from the third operation mode to the first operation mode may not be effected.

In view of the above, in this embodiment the ECU 7 is adapted to change the threshold in conjunction with the inert gas concentration in the CNG, thereby enlarging the operation range in which the first driving mode is used while reducing the difference between the required torque and the actual torque. While in the following a method of changing the threshold for switching between the first operation mode and the second operation mode will be described, the threshold for switching between the first operation mode and the third operation mode may be changed in the same manner.

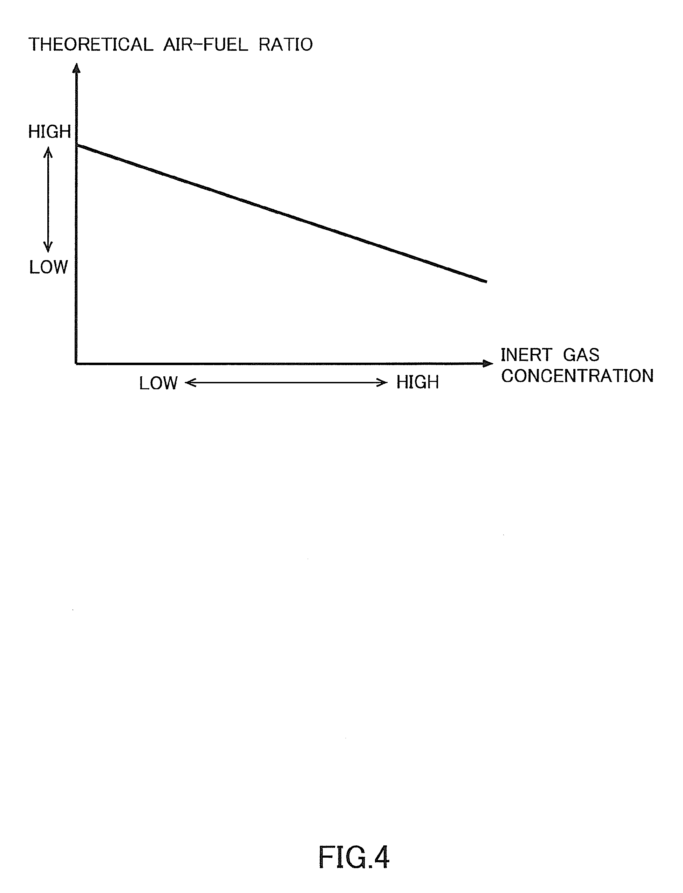

Firstly, a method of determining the inert gas concentration in CNG will be described. The inert gas concentration in CNG correlates with the air-fuel ratio at which CNG and oxygen in air-fuel mixture react without excess or deficiency (theoretical air-fuel ratio). Fig. 4 shows a relationship between the inert gas concentration in CNG and the theoretical air-fuel ratio. In Fig. 4, the horizontal axis represents the inert gas concentration in CNG, and the vertical axis represents the theoretical air-fuel ratio. As shown in Fig. 4, the theoretical air-fuel ratio of CNG is smaller when the inert gas concentration in CNG is high than when it is low. In other words, the higher the inert gas concentration in CNG is, the lower the theoretical air-fuel ratio of CNG is.

Therefore, when a CNG (filling CNG) having properties different from the properties of the remaining CNG in the first fuel tank 52 is supplied for filling, the actual air-fuel ratio becomes different from the target air-fuel ratio, if the fuel injection quantity after filling is controlled based on the theoretical air-fuel ratio of the remaining CNG.

For example, in the case where a filling CNG having an inert gas concentration higher than that of the remaining CNG is supplied for filling, the theoretical air-fuel ratio of the CNG after filling (mixed CNG) is lower than the theoretical air-fuel ratio of the remaining CNG. Therefore, if the fuel injection quantity after filling with the filling CNG is controlled based on the theoretical air-fuel ratio of the remaining CNG, the actual air-fuel ratio becomes larger (or leaner) than the target air-fuel ratio.

On the other hand, in the case where a filling CNG having an inert gas concentration lower than that of the remaining CNG is supplied for filling, the theoretical air-fuel ratio of the CNG after filling (mixed CNG) is higher than the theoretical air-fuel ratio of the remaining CNG. Therefore, if the fuel injection quantity after filling with the filling CNG is controlled based on the theoretical air-fuel ratio of the remaining CNG, the actual air-fuel ratio becomes smaller (or richer) than the target air-fuel ratio.

In view of the above, the ECU 7 is adapted to calculate the fuel injection quantity (or fuel injection time) etau according to the following equation (1) when the internal combustion engine 1 is operating in the first operation mode:

$$etau = etp*ekaf*ekin*k \quad (1).$$

In the above equation (1), etp is a base injection quantity calculated from a map whose arguments include the intake air quantity and the engine speed. This map is prepared in advance by an adaptation process based on, for example, experiments and stored in the ROM of the ECU 7.

In the above equation (1), ekaf is a correction coefficient (air-fuel ratio feedback correction coefficient) for eliminating a difference between the target air-fuel ratio and the actual air-fuel ratio (i.e. the air-fuel ratio measured by the A/F sensor 41). The value of ekaf is calculated, for example, by the following equation (2):

$$ekaf = (efaf + efgaf + 100)/100 \quad (2).$$

In the above equation (2), efaf is a correction value (air-fuel ratio feedback correction value) determined based on the difference between the target air-fuel ratio and the actual air-fuel ratio, and efgaf is an air-fuel ratio learned value for compensating a permanent difference between the target air-fuel ratio and the actual air-fuel ratio (which is a difference due to, for example, a change in the fuel injection characteristics of the first fuel injection valve 5 over time).

In the above equation (1), ekin is a correction coefficient for compensating a change in the theoretical air-fuel ratio with a change in the inert gas concentration in CNG. (This correction coefficient will be hereinafter referred to as the "inert gas concentration learned correction coefficient".) In the above equation (1), k is an increase correction coefficient determined in conjunction with the cooling water temperature and the accelerator opening degree.

The above-mentioned inert gas concentration learned correction coefficient ekin is calculated according to the following equation (3).

$$ekin = (eknco2 + 100)/100 \quad (3).$$

In the above equation (3), eknco2 is a learned value for compensating a permanent difference between the target air-fuel ratio and the actual air-fuel ratio attributed to the inert gas concentration in CNG (which will be hereinafter referred to as the "inert gas concentration learned value"). This learned value corresponds to the "correction value used in air-fuel ratio feedback control" according to the present invention.

In the following, how the inert gas concentration learned value eknco2 is determined will be described. A change in the properties of CNG occurs with supply of CNG into the first fuel tank 52. If the properties of the mixed CNG change with the supply of filling CNG, the air-fuel ratio feedback correction value efaf changes when air-fuel ratio feedback control is started after the supply of filling CNG.

For example, in the case where a filling CNG having a inert gas concentration higher than that of the remaining CNG is supplied, the theoretical air-fuel ratio of the mixed CNG is lower than the theoretical air-fuel ratio of the remaining CNG. Therefore, the air-fuel ratio measured by the A/F sensor 41 shifts to an air-fuel ratio leaner than the target air-fuel ratio. In this case, the air-fuel ratio feedback correction value efaf is a value that makes the fuel injection quantity larger (i.e. a positive value) and the absolute value thereof is larger than the largest value that the absolute value of the correction value can assume if the properties of CNG do not change.

On the other hand, in the case where a filling CNG having a inert gas concentration lower than that of the remaining CNG is supplied, the theoretical air-fuel ratio of the mixed CNG is higher than the theoretical air-fuel ratio of the remaining CNG. Therefore, the air-fuel ratio measured by the A/F sensor 41 shifts to an air-fuel ratio richer than the target air-fuel ratio. In this case, the air-fuel ratio feedback correction value efaf is a value that makes the fuel injection quantity smaller (i.e. a negative value) and the absolute value thereof is larger than the largest value that the absolute value of the correction value can assume if the properties of CNG do not change.

Therefore, if the absolute value of the air-fuel ratio feedback correction value efaf is equal to or larger than a threshold at the time when the air-fuel ratio feedback control is started after the supply of filling CNG, it can be concluded that the properties of CNG have been changed. The "threshold" mentioned above is, for example, equal to the largest value that the absolute value of the air-fuel ratio feedback correction value efaf can assume under the condition that the properties of CNG do not change plus a margin.

In view of the above, the ECU 7 is adapted to update the inert gas concentration learned value eknco2 if the absolute value of the air-fuel ratio feedback correction value efaf is equal to or larger than the threshold at the time when the air-fuel ratio feedback control is started after the start of the internal combustion engine 1. Specifically, the ECU 7 adds a predetermined value $\underline{a}$ to the inert gas concentration learned value eknco2. The predetermined value $\underline{a}$ is set to be a positive value when the air-fuel ratio feedback correction value efaf is a positive value, and the predetermined value $\underline{a}$ is set to be a negative value when the air-fuel ratio feedback correction value efaf is a negative value. The absolute value of the predetermined value $\underline{a}$ may be either a variable value determined as a function of the absolute value of the air-fuel ratio feedback correction value efaf (or the difference between the absolute value of the air-fuel ratio feedback correction value efaf and the above-mentioned threshold) or a fixed value determined by an adaptation process based on, for example, experiments.

In the case where the inert gas concentration learned value eknco2 is updated, the ECU 7 subtracts a value equal to the amount of change in the inert gas concentration learned value eknco2 (the predetermined value $\underline{a}$) with the update from the air-fuel ratio feedback correction value efaf. This is because a correction with a change in the properties of CNG is included in both the inert gas concentration learned value eknco2 and the air-fuel ratio feedback correction value efaf.

The learning process of the inert gas concentration learned value eknco2 is executed prior to the learning process of the air-fuel ratio learned value efgaf. This is because executing the learning process of the air-fuel ratio learned value efgaf prior to the learning process of the inert gas concentration learned value eknco2 after supply of filling CNG would make the absolute value of the air-fuel ratio feedback correction value efaf smaller than the threshold, even if the properties of CNG change.

In the case where the difference between the inert gas concentration in the filling CNG and the inert gas concentration in the remaining CNG is small or where the quantity of the filling CNG is small relative to the quantity of the remaining CNG, there is a possibility that the difference between the properties of the mixed CNG and the properties of the remaining CNG is small. In addition, the value of the air-fuel ratio learned value efgaf is set for each of a plurality of operation ranges sectioned according to, for example, the magnitude of the load. Therefore, a change in the properties of CNG may not lead to a significant change in the air-fuel ratio feedback correction value efaf in some operation ranges.

In view of this, the ECU 7 may be adapted to conclude that the properties of CNG have changed and update the inert gas concentration learned value eknco2 if the absolute value of the average efgafave of the air-fuel ratio learned value efgaf over all the operation ranges exceeds a threshold, even if the absolute value of the air-fuel ratio feedback correction value efaf does not exceed the threshold.

Specifically, if the absolute value of the above-mentioned average efgafave is equal to or larger than a threshold, the ECU 7 may add a predetermined value $\underline{b}$ to the inert gas concentration learned value eknco2. The predetermined value $\underline{b}$ is set to be a positive value when the average efgafave is a positive value and set to be a negative value when the average efgafave is a negative value. The absolute value of the predetermined value $\underline{b}$ may be either a variable value determined as a function of the absolute value of the average efgafave or a fixed value determined in advance by an adaptation process based on, for example, experiments. The absolute value of the predetermined value $\underline{b}$ is set to be smaller than the absolute value of the above-mentioned predetermined value a.

The threshold to be compared with the above-mentioned average efgafave is a value equal to the largest value that the absolute value of the average value efgafave can assume under the condition that the properties of CNG do not change plus a margin. In the following description, the threshold to be compared with the air-fuel ratio feedback correction value efaf will be referred to as the threshold A, and the threshold to be compared with the absolute value of the average of the air-fuel ratio learned value efgaf will be referred to as the threshold B.

In the case where the inert gas concentration learned value eknco2 is updated based on the condition that the absolute value of the above-mentioned average efgafave is equal to or larger than the threshold B, the ECU 7 subtracts a value equal to the change in the inert gas concentration learned value eknco2 with the update (the predetermined value b) from the air-fuel ratio learned value efgaf. In this process, the ECU 7 subtracts the value equal to the change in the inert gas concentration learned value eknco2 with the update from the air-fuel ratio learned value efgaf in all the operation ranges.

If the inert gas concentration learned value eknco2 is determined (or updated) by the above-described method, the fuel injection quantity (fuel injection time) etau calculated according to equation (1) mentioned above has a value that can compensate a change in the theoretical air-fuel ratio with a change in the properties of the CNG. Consequently, the air-fuel ratio of the air-fuel mixture can be caused to converge to the target air-fuel ratio quickly when the properties of the CNG change.

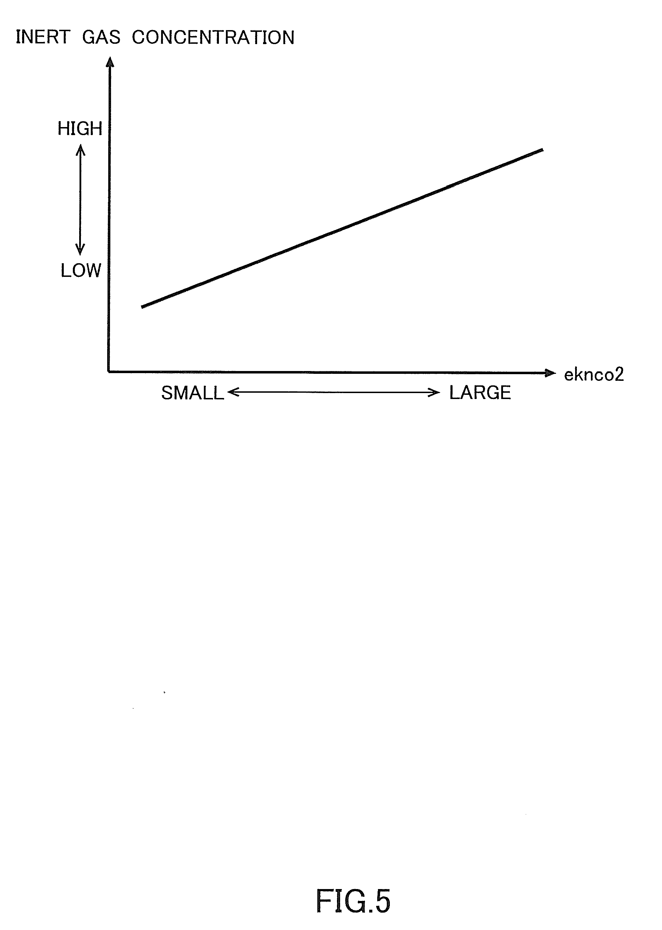

Since the inert gas concentration learned value eknco2 is a learned value used to compensate a permanent difference between the target air-fuel ratio and the actual air-fuel ratio attributed to the inert gas concentration in CNG, it correlates with the inert gas concentration in CNG. Specifically, as shown in Fig. 5, the higher the inert gas concentration in CNG is, the larger the inert gas concentration learned value eknco2 is. More specifically, the inert gas concentration learned value eknco2 is proportional to the inert gas concentration in CNG.

Therefore, if the relationship between the inert gas concentration learned value eknco2 and the inert gas concentration is determined in advance, it is possible to determine the inert gas concentration from the inert gas concentration learned value eknco2.

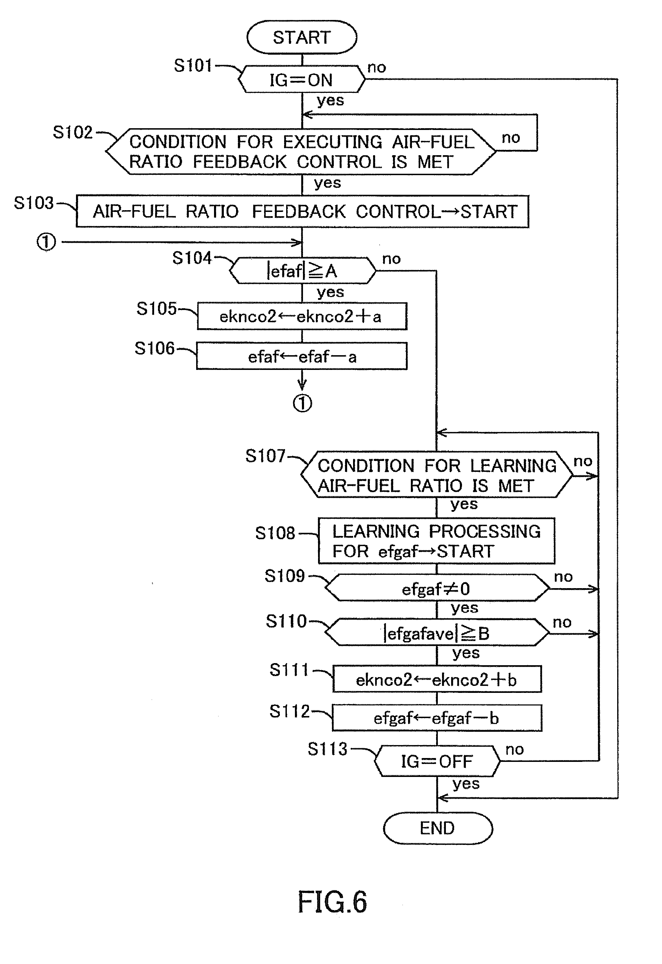

The process of determining the inert gas concentration learned value eknco2 will be described with reference to Fig. 6. Fig. 6 is a flow chart of a fuel injection quantity calculation routine, which is executed by the ECU 7 while the internal combustion engine 1 is operating in the first operation mode. The fuel injection quantity calculation routine is stored in the ROM of the ECU 7 in advance and executed at the time when the ignition switch is turned on.

In the fuel injection quantity calculation routine, firstly in step S101, the ECU 7 determined whether or not the ignition switch is turned on (IG = ON). If the determination made in step S101 is negative (IG = OFF), the ECU 7 terminates the execution of this routine. If the determination made in step S101 is affirmative (IG = ON), the ECU 7 proceeds to step S102.

In step S102, the ECU 7 determines whether or not a condition for executing the air-fuel ratio feedback control is met. The condition for executing the air-fuel ratio feedback control is that the A/F sensor 41 is active. Whether the A/F sensor 41 is active is determined based on, for example, whether the temperature of the A/F sensor 41 is equal to or higher than the active temperature, whether the cooling water temperature is equal to or higher than a predetermined temperature (that is, a cooling water temperature that is reached when the temperature of the A/F sensor 41 is higher than the active temperature), or whether the temperature of the exhaust gas at a location downstream of the A/F sensor 41 is equal to or higher than a predetermined temperature (that is, an exhaust gas temperature that is reached when the temperature of the A/F sensor 41 is higher than the active temperature).

If the determination made in the above step S102 is negative, the ECU 7 executes the processing of the above step S102 repeatedly. On the other hand, if the determination made in step S102 is affirmative, the ECU proceeds to step S103.

In step S103, the ECU 7 starts to perform the air-fuel ratio feedback control. In this step, the ECU 7 performs the air-fuel ratio feedback control in accordance with a subroutine separately programmed. In this subroutine, the ECU 7 firstly calculates an air-fuel ratio feedback correction value efaf on the basis of the difference between the air-fuel ratio measured by the A/F sensor 41 and the target air-fuel ratio. Then, the ECU 7 calculates an air-fuel ratio feedback correction coefficient ekaf by substituting the air-fuel ratio feedback correction value efaf into the aforementioned equation (2). Then, the ECU 7 calculates a fuel injection quantity (fuel injection time) etau by substituting the air-fuel ratio feedback correction coefficient ekaf into the aforementioned equation (1). This subroutine is executed repeatedly so long as the condition for executing the air-fuel ratio feedback control is met.

In step S104, the ECU 7 determines whether or not the absolute value (|efaf|) of the air-fuel ratio feedback correction value efaf calculated in the above step S103 is equal to or larger than the threshold A.

An absolute value (|efaf|) of the air-fuel ratio feedback correction value efaf equal to or larger than the threshold A indicates that the inert gas concentration in the mixed CNG have changed with the supply of CNG having properties different from the properties of the remaining CNG. Therefore, if the determination made in step S104 is affirmative (|efaf| ≥ A), the ECU 7 proceeds to step S105, where it executes a learning process of the inert gas concentration learned value eknco2. Specifically, the ECU 7 determines a predetermined value _a_ based on the sign (positive/negative) of the air-fuel ratio feedback correction value efaf and the absolute value of the air-fuel ratio feedback correction value efaf.

Then, the ECU 7 adds the predetermined value a to the inert gas concentration learned value eknco2 and substitutes the result of this calculation (= eknco2 + a) as an updated inert gas concentration learned value eknco2.

After executing the processing of the above step S105, the ECU 7 proceeds to step S106, where it subtracts the predetermined value a from the air-fuel ratio feedback correction value efaf. After finishing the processing of the above step S106, the ECU 7 returns to the above step S104. In other words, the ECU 7 executes the processing of steps S105 and S106 repeatedly until the absolute value of the air-fuel ratio feedback correction value efaf becomes smaller than the threshold A.

When the absolute value of the air-fuel ratio feedback correction value efaf becomes smaller than the threshold A with the repetitive execution of the processing of steps S105 and S106, the ECU 7 makes a negative determination (|efaf| < A) in step S104. If the determination made in step S104 is negative, the ECU 7 executes a learning process of the air fuel ratio learned value efgaf in steps S107 to S112

In step S107, the ECU 7 determines whether or not a condition for learning of the air-fuel ratio learned value efgaf (air-fuel ratio learning condition) is met. The air-fuel ratio learning condition is that the internal combustion engine 1 is warmed up (the cooling water temperature is equal to or higher than a warm-up criterion temperature) or that a state in which the value of the air-fuel ratio feedback correction coefficient falls out of a predetermined range has been continuing for a predetermined period of time. If the determination made in step S107 is negative, the ECU 7 executes the processing of step S107 repeatedly.

If the determination made in step S107 is affirmative, the ECU 7 proceeds to step S108. In step S108, the ECU 7 starts a learning process of the air-fuel ratio learned value efgaf. In this process, the ECU 7 executes the learning process of the air-fuel ratio learned value efgaf using a known method.

In step S109, the ECU 7 determines whether or not the air-fuel ratio learned value efgaf calculated in the above step S108 has a value other than zero. If the air-fuel ratio learned value efgaf calculated in the above step S108 is zero (efgaf = 0), the ECU 7 returns to step S107. On the other hand, if the air-fuel ratio learned value efgaf calculated in the above step S108 has a value other than zero (efgaf ≠ 0), the ECU 7 proceeds to step S110.

In step S110, the ECU 7 calculates the average efgafave of the air-fuel ratio learned value efgaf over all the operation ranges of the internal combustion engine 1 and determines whether or not the absolute value of this average efgafave is equal to or larger than the threshold B. If the determination made in the above step S110 is negative (|efgafave| < B), the ECU 7 returns to the above step S107. On the other hand, if the determination made in the above step S110 is affirmative (|efgafave| ≥ B), the ECU 7 proceeds to step S111.

In step S111, the ECU 7 executes a learning process of the inert gas concentration learned value eknco2. Specifically, the ECU 7 firstly determines a predetermined value b based on the sign (positive/negative) of the aforementioned average efgafave and the absolute value of the average efgafave. Then, the ECU 7 adds this predetermined value b to the inert gas concentration learned value eknco2 and substitutes the result of this calculation (= eknco2 + b) as an updated inert gas concentration learned value eknco2.

After executing the processing of the above step S111, the ECU 7 proceeds to step S112, where it subtracts the aforementioned predetermined value b from the air-fuel ratio learned value efgaf. In this process, the ECU 7 executes the process of subtracting the predetermined value b for all the air-fuel ratio learned values efgaf set in the respective operation ranges of the internal combustion engine 1.

After finishing the processing of the above step S112, the ECU 7 proceeds to step S113, where it determines whether or not the ignition switch is turned off (IG = OFF). If the determination made in step S113 is negative, the ECU 7 executes the processing of the above step S107 and the subsequent steps (or the above step S104 and the subsequent steps) again. On the other hand, if the determination made in step S113 is affirmative, the ECU 7 terminates the execution of this routine.

As described above, by executing the fuel injection quantity calculation routine, an inert gas concentration learned value eknco2 adapted to the inert gas concentration in CNG is determined. In consequence, it is possible to calculate the inert gas concentration in CNG using the inert gas concentration learned value eknco2 and a map like that shown in Fig. 5.

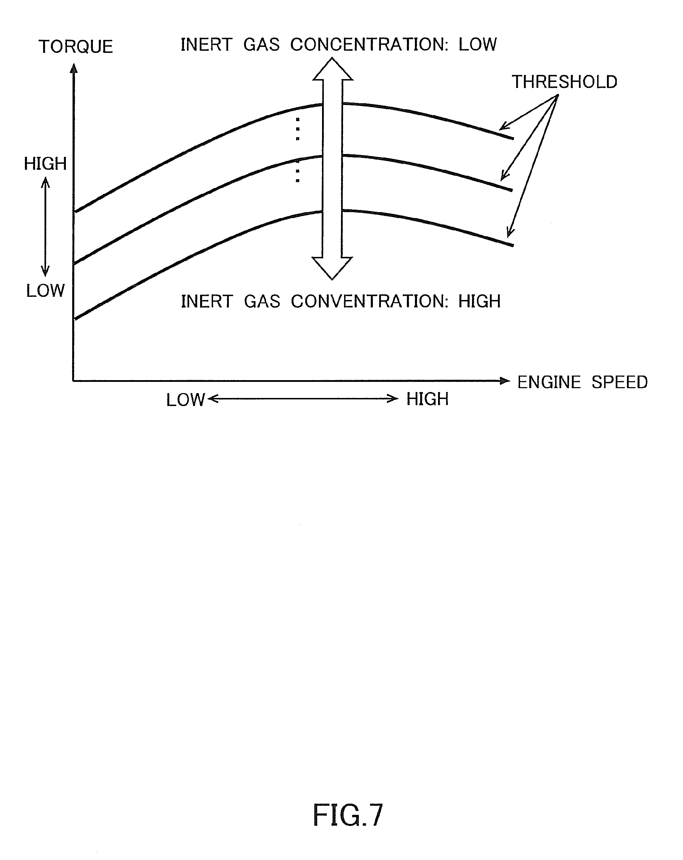

Next, how the ECU 7 changes the threshold used in controlling switching between the first operation mode and the second operation mode in conjunction with the inert gas concentration in CNG will be described. As described before, the higher the inert gas concentration in CNG is, the lower the maximum torque (the first maximum torque) that the internal combustion engine 1 can generate in the first mode is. Therefore, it is preferred that the higher the inert gas concentration in CNG is, the smaller the value of the threshold used in controlling switching between the first operation mode and the second operation mode is set to be, as shown in Fig. 7.

According to this method of changing the threshold, if filling with the filling CNG makes the inert gas concentration in the mixed CNG higher than the inert gas concentration in the remaining CNG (namely if the first maximum torque with the mixed CNG is lower than the first maximum torque with the filling CNG), the threshold after filling with the filling CNG is changed to a value smaller than that before filling with the filling CNG. This prevents the internal combustion engine 1 from being caused to operate in the first operation mode when the required torque is higher than the first maximum torque with the mixed CNG. In consequence, a situation in which the actual torque of the internal combustion engine 1 is lower than the required torque, a situation in which the actual torque increases abruptly upon switching from the first operation mode to the second operation mode, and a situation in which the actual torque decreases abruptly upon switching from the second operation mode to the first operation mode can be prevented from occurring.

According to this method of changing the threshold, if filling with the filling CNG makes the inert gas concentration in the mixed CNG lower than the inert gas concentration in the remaining CNG (namely if the first maximum torque with the mixed CNG is higher than the first maximum torque with the filling CNG), the threshold after filling with the filling CNG is changed to a value larger than that before filling with the filling CNG. Therefore, a situation in which the operation mode is switched from the first operation mode to the second operation mode when the required torque is lower than the first maximum torque with the mixed CNG and a situation in which the operation mode is not switched from the second operation mode to the first operation mode when the required torque is lower than the first maximum torque with the mixed CNG can be prevented from occurring. Therefore, a reduction in the difference between the actual torque and the required torque and an enlargement of the operation range in which the first operation mode is used can be achieved.

If the threshold used as a criterion for switching from the first operation mode to the second operation mode and the threshold used as a criterion for switching from the second operation mode to the first operation mode are set to be equal to each other, there is a possibility that switching between the first operation mode and the second operation mode may occur frequently if the required torque fluctuates in the neighborhood of the threshold. In such cases, there is a possibility that the actual operation state of the internal combustion engine 1 cannot follow the control of switching between the first operation mode and the second operation mode.

In this embodiment, the threshold (the first threshold) used as a criterion for switching from the first operation mode to the second operation mode and the threshold (the second threshold) used as a criterion for switching from the second operation mode to the first operation mode are set to be different from each other.

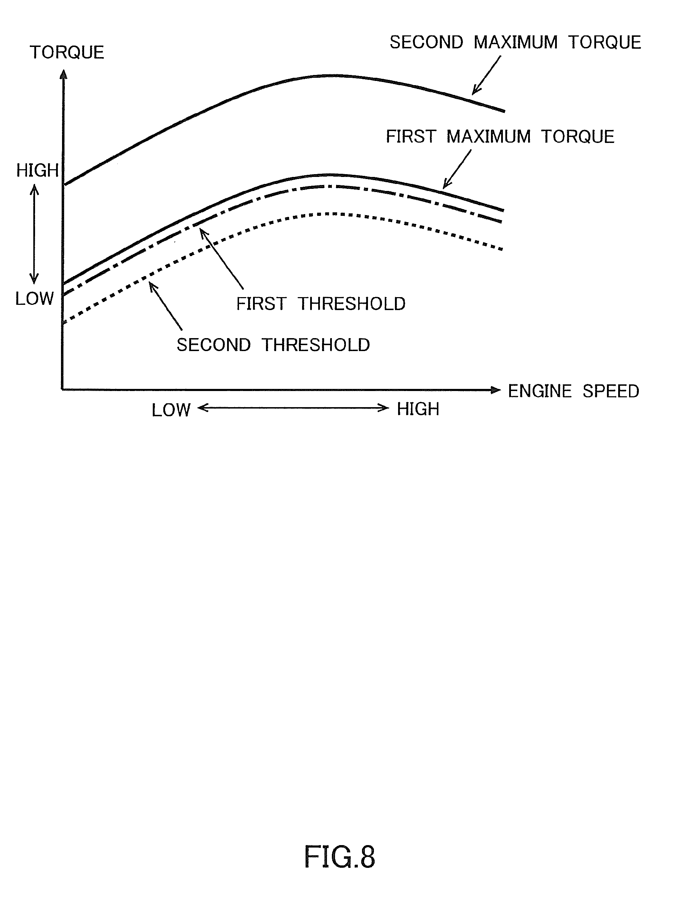

Specifically, as shown in Fig. 8, the first threshold is set to be equal to the first maximum torque minus a margin, and the second threshold is set to be equal to the first threshold minus a specific value (hysteresis width). The "specific value" mentioned above is determined by an adaptation process based on, for example, experiments. For example, the specific value may be set to be equal to the smallest value that allows the actual operation state of the internal combustion engine 1 to follow the control of switching between the first operation mode and the second operation mode when the required torque fluctuates in the neighborhood of the first or second threshold.

If the first threshold and the second threshold are set to be different from each other, a situation in which the actual torque is lower than the required torque and a situation in which switching between the first operation mode and the second operation mode occurs frequently can be prevented from occurring.

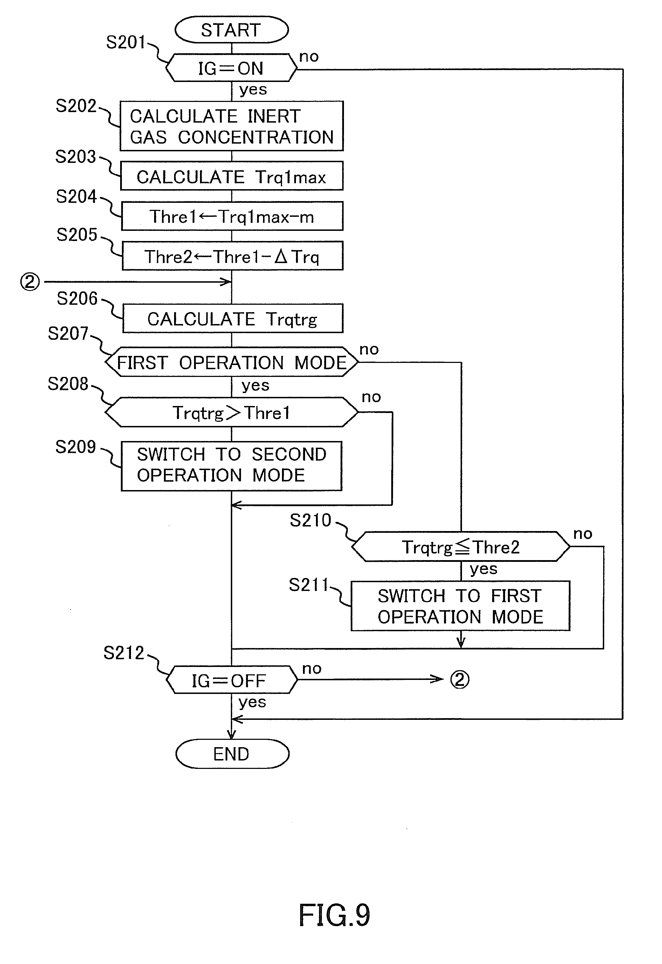

In the following, a process of switching between the first operation mode and the second operation mode will be described with reference to Fig. 9. Fig. 9 is a flow chart of an operation mode switching control routine. The operation mode switching control routine is stored in the ROM of the ECU 7 in advance and executed at the time when the ignition switch is turned on.

In the operation mode switching control routine shown in Fig. 9, in step S201, the ECU 7 determines whether or not the ignition switch is turned on (IG = ON). If the determination made in step S201 is negative (IG = OFF), the ECU 7 terminates the execution of this routine. If the determination made in step S201 is affirmative (IG = ON), the ECU 7 proceeds to step S202.

In step S202, the ECU 7 calculates the inert gas concentration in CNG. Specifically, the ECU 7 calculates the inert gas concentration in CNG on the basis of the inert gas concentration learned value eknco2 calculated in the above-described fuel injection quantity calculation routine and a map like that shown in Fig. 5. The determination means according to the present invention is implemented by the execution of the processing of step S102 by the ECU 7.

In step S203, the ECU 7 calculates the first maximum torque Trq1max using the inert gas concentration calculated in the above step S202 as a parameter. Specifically, the ECU 7 calculates the first maximum torque Trq1max from the inert gas concentration calculated in the above step S202 and a map like that shown in Fig. 7.

In step S204, the ECU 7 calculates the first threshold Thre1 by subtracting a margin m from the first maximum torque Trq1max calculated in the above step S203.

In step S205, the ECU 7 calculates the second threshold Thre2 by subtracting a specific value $\Delta$Trq from the first threshold Thre1 calculated in the above step S204.

In step S206, the ECU 7 calculates the required torque Trqtrg of the internal combustion engine 1. Specifically, the ECU 7 calculates the required torque Trqtrg using as a parameter at least one of the output signal of the accelerator position sensor 8 (accelerator opening degree), the opening degree of the throttle valve 2 (throttle opening degree), and the output signal of the air flow meter 31 (intake air quantity). In this process, the ECU 7 may calculate the required torque Trqtrg using a computation model or map whose arguments include at least one of the accelerator opening degree, the throttle opening degree, and the intake air quantity.

In step S207, the ECU 7 determines whether or not the operation mode of the internal combustion engine 1 is the first operation mode. If the determination made in step S207 is affirmative, the ECU 7 proceeds to step S208. On the other hand, if the determination made in step S207 is negative, the ECU 7 proceeds to step S210.

In step S208, the ECU 7 determines whether or not the required torque Trqtrg calculated in the above step S206 is higher than the first threshold Thre1. If the determination made in step S208 is affirmative (Trqtrg > Thre1), the ECU 7 proceeds to step S209, where it switches the operation mode of the internal combustion engine 1 from the first operation mode to the second operation mode. After executing the processing of step S209, the ECU 7 proceeds to step S212. If the determination made in step S208 is negative (Trqtrg ≤ Thre1), the ECU 7 skips the processing of step S209 and proceeds to step S212.

In step S210, the ECU 7 determines whether or not the required torque Trqtrg calculated in the above step S206 is equal to or lower than the second threshold Thre2. If the determination made in step S210 is affirmative (Trqtrg ≤ Thre2), the EUC 7 proceeds to step S211, where it switches the operation mode of the internal combustion engine from the second operation mode to the first operation mode. After executing the processing of step S211, the ECU 7 proceeds to step S212. If the determination made in step S210 is negative (Trqtrg > Thre2), the ECU 7 skips the processing of step S211 and proceeds to step S212.

In step S212, the ECU 7 determines whether or not the ignition switch is turned off. If the determination made in step S212 is affirmative, the ECU 7 terminates the execution of this routine. On the other hand, if the determination made in step S212 is negative, the ECU 7 executes the processing of step 206 and the subsequent steps again.

The changing means according to the present invention is implemented by executing the processing of steps S208 to S211 by the ECU 7.

According to the embodiment described in the foregoing, the operation range in which the first operation mode is used can be enlarged while preventing the actual torque of the internal combustion engine 1 from departing from the required torque, when a filling CNG having properties different from the properties of the remaining CNG is supplied for filling.

While a case in which the first threshold and the second threshold are changed in conjunction with the inert gas concentration in CNG has been described in the description of this embodiment, the first threshold and the second threshold may be changed in conjunction with the inert gas concentration learned value eknco2.

Some vehicles equipped with a multifuel internal combustion engine have a switch that allows the driver to select the operation mode at will. In the case of such vehicles, switching of the operation mode based on the first threshold Thre1 and the second threshold Thre 2 may be performed only while the first operation mode is selected by the driver.

**<EMBODIMENT 2>**

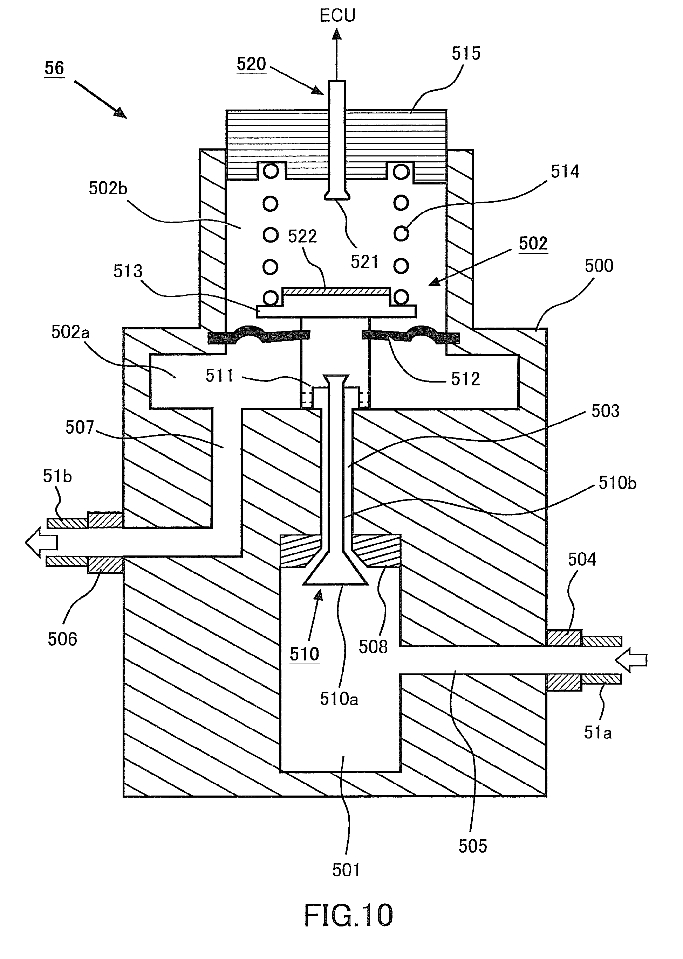

Next, a second embodiment of the present invention will be described with reference to Figs. 10 to 14. In the following, features different from those in the above-described first embodiment will be described, and like features will not be described.

The difference between the above-described first embodiment and this embodiment resides in the method of determining the inert gas concentration in CNG. In the above-described first embodiment, there has been described a method in which the inert gas concentration in CNG is determined using a correction value used in the air-fuel ratio feedback control (that is, the inert gas concentration learned value eknco2) as a parameter. In this embodiment, there will be described a method in which the inert gas concentration in CNG is determined using the degree of opening of the regulator 56 as a parameter.

If the A/F sensor 41 is not active at the time when the internal combustion engine 1 is started for the first time after supply of CNG, it is not possible to start the air-fuel ratio feedback control immediately. Therefore, if the A/F sensor 41 is not active at the time when the internal combustion engine 1 is started for the first time after supply of CNG, it is difficult to calculate the inert gas concentration on the basis of the inert gas concentration learned value eknco2.

In view of this, the ECU 7 is adapted to calculate the inert gas concentration on the basis of the degree of opening of the regulator 56, if the A/F sensor 41 is not active at the time when the internal combustion engine 1 is started for the first time after supply of CNG.

The general construction of the regulator 56 will be described with reference to Fig. 10. Fig. 10 is a cross sectional view showing the general construction of the regulator 56. The regulator 56 has a housing 500, in which a primary chamber 501 and a secondary chamber 502 are provided. The primary chamber 501 and the secondary chamber 502 are in communication with each other through a communication channel 503.

The aforementioned primary chamber 501 is in communication with an inlet 504 for taking CNG into the primary chamber 501, through a channel 505. The inlet 504 is connected with the first fuel passage 51 upstream of the regulator 56 (namely, the first fuel passage 51 extending from the first fuel tank 52 to the regulator 56).

The aforementioned secondary chamber 502 is in communication with an outlet 506 for discharging CNG out of the secondary chamber 502, through a channel 507. The outlet 506 is connected with the first fuel passage 51 downstream of the regulator 56 (namely, the first fuel passage 51 extending from the regulator 56 to the first delivery pipe 50).

In the following, the first fuel passage 51 extending from the first fuel tank 52 to the regulator 56 will be referred to as the "upstream fuel passage 51a", and the first fuel passage 51 extending from the regulator 56 to the first delivery pipe 50 will be referred to as the "downstream fuel passage 51b", as shown in Fig. 10.

A valve stem 510b of a poppet valve 510 is arranged in the aforementioned communication channel 503. An end of the valve stem 510b projects into the primary chamber 501, and a valve body 510a having a conical shape is attached to this end. The outer diameter of the valve stem 510b is smaller than the inner diameter of the communication channel 503, so that CNG can flow in the annular gap between the outer circumference of the valve stem 510b and the inner circumference of the communication channel 503. A valve seat 508 is provided at the open end of the communication channel 503 in the primary chamber 501 so that the open end of the communication channel 503 is closed when the valve body 510a is seated on the valve seat 508.

The base end portion of the valve stem 510b extends into the secondary chamber 502, and its end is connected to the end of a holder 511. An annular diaphragm 512 is provided between the outer circumference of the holder 511 and the inner circumference of the housing 500. The secondary chamber 502 is partitioned by the diaphragm 512 into two chambers 502a, 502b. In the following, the chamber 502a among the two chambers 502a, 502b that is in communication with the aforementioned outlet 506 will be referred to as the decompression chamber 502a, and the other chamber 502b will be referred to as the atmospheric chamber 502b.

A spring retainer 513 is attached to the base end of the holder 511. The spring retainer 513 is opposed to an adjusting bolt 515 screwed to the housing 500. A coil spring 514 is arranged between the spring retainer 513 and the adjusting bolt 515. The coil spring 514 is adapted to bias the diaphragm 512 and the valve 510 in the direction from the secondary chamber 502 toward the primary chamber 501 via the spring retainer 513 and the holder 511. The biasing force exerted on the spring retainer 513 by the coil spring 514 is adapted to be adjusted by the adjusting bolt 515.

With the above-described construction of the regulator 56, when the pressure in the decompression chamber 502a is lower than the biasing force (set pressure) of the coil spring 514, the spring retainer 513 and the holder 511 are shifted in the direction from the secondary chamber 502 toward the primary chamber 501 by the biasing force of the coil spring 514. Then, the diaphragm 512 and the valve 510 also shift in the direction from the secondary chamber 502 toward the primary chamber 501. Consequently, the valve body 510a is separated from the valve seat 508 (namely, the valve 510 opens), so that the primary chamber 501 and the decompression chamber 502a comes into communication with each other through the communication channel 503.

The outer diameter of the holder 511 is dimensioned to be larger than the inner diameter of the open end of the communication channel 503 in the decompression chamber 502a. Therefore, when the diaphragm 512 and the valve shift in the direction from the secondary chamber 502 toward the primary chamber 501, the position at which the diaphragm 512 and the valve 510 can reach is limited by the abutment of the end of the holder 511 to the portion of the housing 500 around the open end. Therefore, the degree of opening of the valve 510 (i.e. the opening area or the channel cross sectional area of the communication channel 503) becomes largest when the end of the holder 511 abuts the portion of the housing 500 around the open end, as shown in Fig. 10.

When the valve 510 is open, the CNG flowing from the upstream fuel passage 51a into the inlet 504 flows through the channel 505, the primary chamber 501, and the communication channel 503 and into the decompression chamber 502a. The CNG flowing into the decompression chamber 502a is supplied to the first delivery pipe 50 through the channel 507, the outlet 506, and the downstream fuel passage 51b.

As CNG is supplied continuously from the primary chamber 501 to the decompression chamber 502a, the pressure in the decompression chamber 502a and the downstream fuel passage 51b increases. As the pressure in the decompression chamber 502a and the downstream fuel passage 51b exceeds the biasing force (set pressure) of the coil spring 514, the diaphragm 512 shifts in the direction from the primary chamber 501 toward the secondary chamber 502 (or in the direction from the decompression chamber 502a to the atmospheric chamber 502b). As the diaphragm 512 shifts in the direction from the primary chamber 501 toward the secondary chamber 502, the valve 510 also shifts in the direction from the primary chamber 501 toward the secondary chamber 502, whereby the degree of opening of the valve 510 (or the opening area of the communication channel 503) is decreased. When the valve body 510a is seated on the valve seat 508 (namely, when the valve 510 is closed), the degree of opening of the valve 510 (or the opening area or the channel cross sectional area of the communication channel 503) becomes smallest (zero). In this state, flow of CNG from the primary chamber 501 to the decompression chamber 502a is shut off.

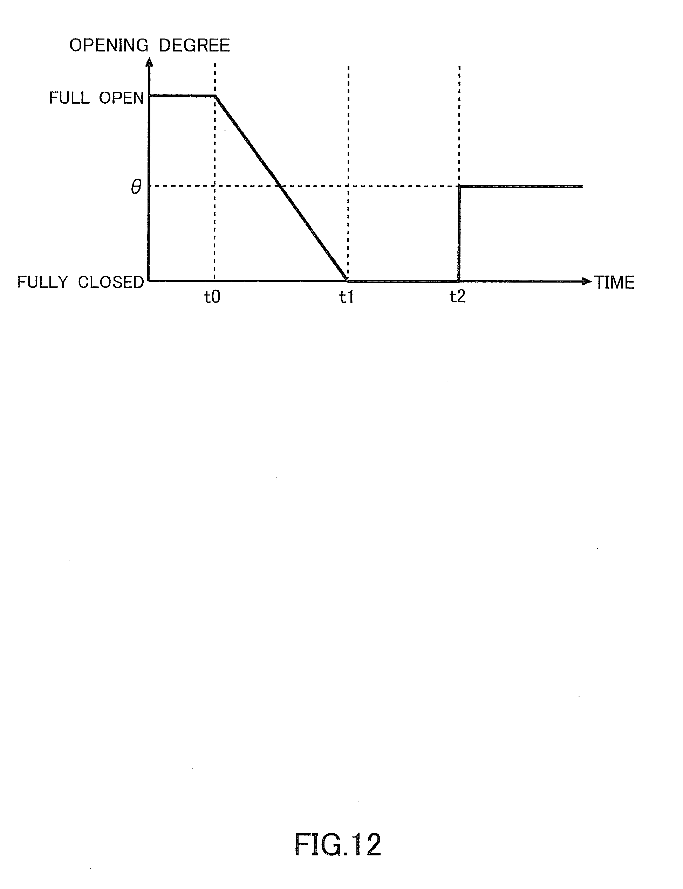

Fig. 12 shows the operation of the valve 510 before and after start of the internal combustion engine 1. In Fig. 12 the horizontal axis represents the time, and the vertical axis represents the degree of opening of the valve 510. While the internal combustion engine 1 is not running, the pressure in the decompression chamber 502a is lower than the biasing force (set pressure) of the coil spring 514, because the aforementioned shut-off valve 55 is closed and the CNG remaining in the downstream fuel passage 51b and the decompression chamber 502a gradually leaks out through the first fuel injection valve 5. Consequently, the degree of opening of the valve 510 is maximum (full) while the internal combustion engine 1 is not running.

When the ignition switch is turned on (at t0 in Fig. 12), the shut-off valve 55 is opened, and CNG stored in the first fuel tank 52 flows into the inlet 504 of the regulator 56 through the upstream fuel passage 51a. The CNG flowing into the inlet 504 flows through the channel 505, the primary chamber 501, and the communication channel 503 and into the decompression chamber 502a. Consequently, the pressure in the decompression chamber 502a rises, causing the degree of opening of the valve 510 to decrease. When the pressure in the decompression chamber 502a becomes equal to or higher than the set pressure (biasing force of the coil spring 514) (at t1 in Fig. 12), the degree of opening of the valve 510 becomes zero (fully closed).

Thereafter, when the starter switch is turned on, and then fuel injection through the first fuel injection valve 5 is started (at t2 in Fig. 12), the degree of opening of the valve 510 becomes stable at a substantially constant intermediate opening degree ($\theta$ in Fig. 12). In this state, the valve 510 of the regulator 56 operates repeatedly in such a manner that it opens when the pressure in the decompression chamber 502a falls with fuel injection through the first fuel injection valve 5 to become lower than the set pressure and closes when the pressure in the decompression chamber 502a rises with supply of CNG to the decompression chamber 502a from the primary chamber 501 to become equal to or higher than the set pressure. However, the speed of shift of the diaphragm 512 and the valve 510 is too slow to follow the cycle of fuel injection. Consequently, the degree of opening of the valve 510 is kept stable at a substantially constant intermediate opening degree $\theta$.

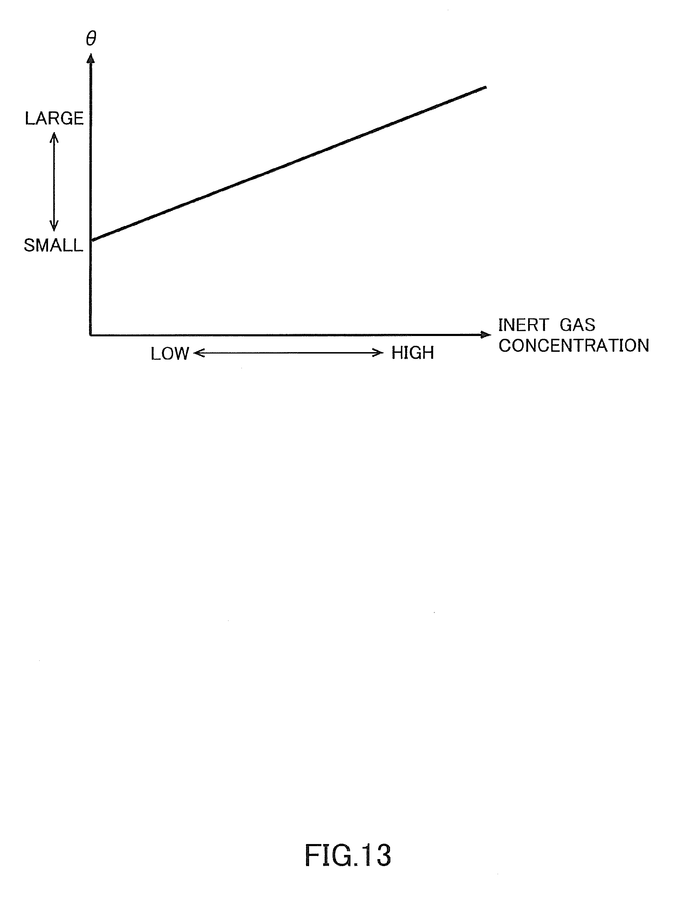

The constant intermediate opening degree $\theta$ mentioned above varies with the concentration of the inert gases contained in CNG. Fig. 13 shows relationship between the intermediate opening degree $\theta$ of the valve 51 and the concentration of the inert gases contained in CNG under a condition that the pressure in the decompression chamber 502a and the downstream fuel passage 51b is constant. In Fig. 13, the horizontal axis represents the concentration of the inert gases contained in CNG, and the vertical axis represents the intermediate opening degree $\theta$ of the valve 510.

As shown in Fig. 13, when the pressure in the decompression chamber 502a and the downstream fuel passage 51b is constant, the higher the inert gas concentration in CNG is, the larger the intermediate opening degree $\theta$ is. Specifically, the constant intermediate opening degree $\theta$ mentioned above is proportional to the inert gas concentration in CNG.

Therefore, if the aforementioned intermediate opening degree $\theta$ is determined, the inert gas concentration in CNG can be calculated using the relationship shown in Fig. 13. In other words, the inert gas concentration in CNG can be determined even when the A/F sensor 41 is not active at the time when the internal combustion engine 1 is started for the first time after supply of CNG.

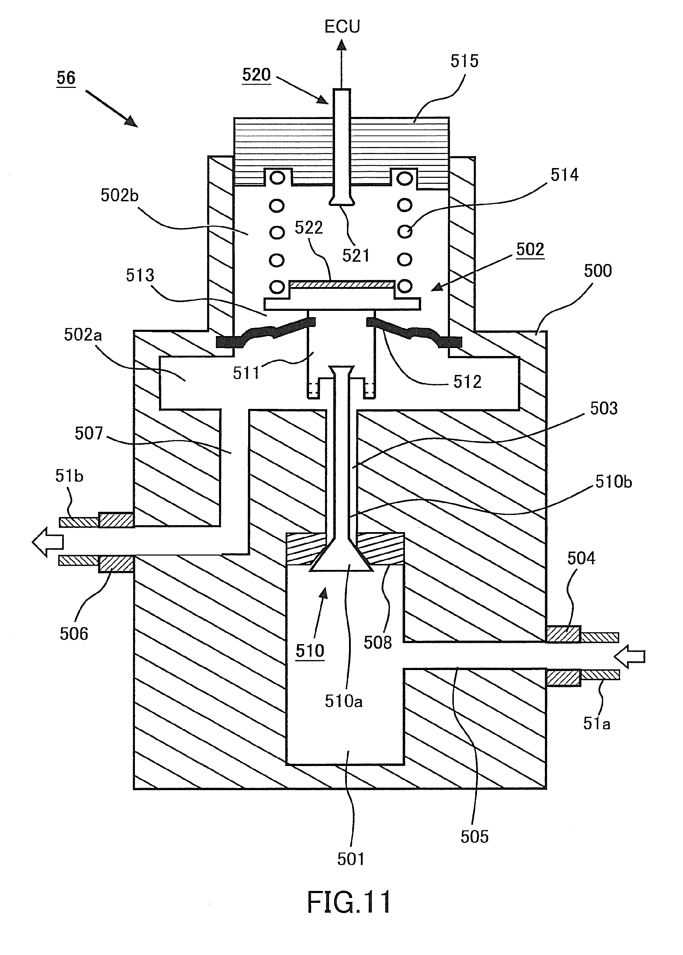

The method of measuring the opening degree of the valve 510 of the regulator 56 may be measuring the amount of lift of the valve 510 (i.e. the amount of shift of the valve 510 from its fully-closed position). In this embodiment, the regular 56 is equipped with a lift sensor 520 that measures the amount of lift of the valve 510. As shown in Figs. 10 and 11, the lift sensor 520 includes a plate-like target 522 attached to the surface of the spring retainer 513 opposed to the adjusting bolt 515 and a gap sensor 521 attached to the portion of the adjusting bolt 515 opposed to the spring retainer 513.

In the lift sensor 520, the target 522 shifts integrally with the valve 510, and the gap sensor 521 outputs an electrical signal correlating with the relative distance of the target 522 and the gap sensor 521. Thus, the amount of lift (opening degree) of the valve 510 can be specified by memorizing the value of the output signal of the gap sensor 521 when the valve 510 is fully closed in advance and calculating the difference between this value and the value of the output signal of the gap sensor 521 at the present time.

Thus, the ECU 7 can calculate the inert gas concentration in CNG using the output signal of the lift sensor 520 at a time when fuel injection through the first fuel injection valve 5 is performed (intermediate opening degree $\theta$) and the relationship shown in Fig. 13.

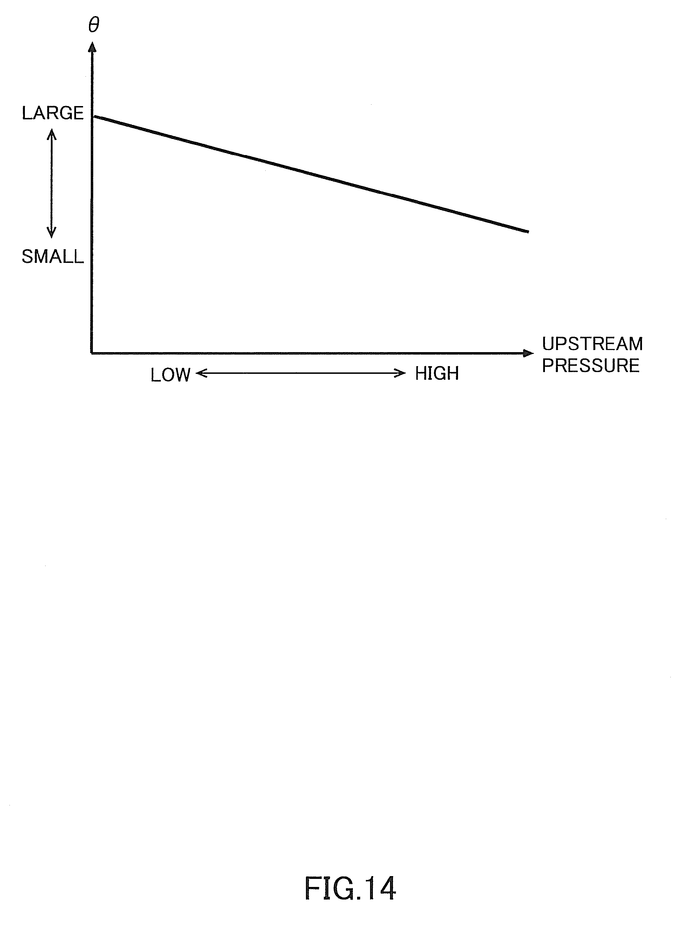

The aforementioned intermediate opening degree $\theta$ varies depending not only on the inert gas concentration in CNG but also on the pressure of CNG upstream of the regulator 56 (which will be hereinafter referred to as the "upstream pressure"). For example, if the inert gas concentration in CNG is constant, the higher the upstream pressure is, the higher the volume flow rate of CNG passing through the regulator is. Therefore, if the inert gas concentration in CNG and the pressure in the decompression chamber 502a are constant, the higher the upstream pressure is, the smaller the intermediate opening degree $\theta$ is, as shown in Fig. 14.

Therefore, it is preferred that the ECU 7 be adapted to calculate the inert gas concentration in CNG using the relationship between the intermediate opening degree $\theta$ and the upstream pressure in addition to the relationship between the intermediate pressure $\theta$ and the inert gas concentration in CNG. Specifically, the ECU 7 calculates a correction coefficient from the upstream pressure. The correction coefficient is an integer equal to or larger than 1. The higher the upstream pressure is, the larger the correction coefficient is set to be. The relationship between the correction coefficient and the upstream pressure may be determined in advance by experiments and stored in the ROM of the ECU 7 as a map. The ECU 7 may multiply the output signal of the lift sensor 520 (intermediate opening degree $\theta$) by the above-mentioned correction coefficient and calculate the inert gas concentration from the result of this multiplication and the relationship shown in Fig. 13.

As the aforementioned upstream pressure, the output signal of the pressure sensor 57 may be used. Since the upstream pressure correlates with the temperature in the upstream fuel passage 51a and the temperature in the first fuel tank 52, the output signal of an intake air temperature sensor or an outside air temperature sensor may be used as a value correlating with the upstream pressure.

If the inert gas concentration in CNG is determined by the above-described method, the values of the first threshold Thre1 and the second threshold Thre2 are adapted to the properties of CNG, even if the A/F sensor 41 is not active at the time when the internal combustion engine 1 is started for the first time after supply of CNG. Therefore, a reduction in the difference between the actual torque of the internal combustion engine 1 and the required torque and an enlargement of the operation range in which the first operation mode is used can be achieved, even when the A/F sensor 41 is not active.

## <EMBODIMENT 3>

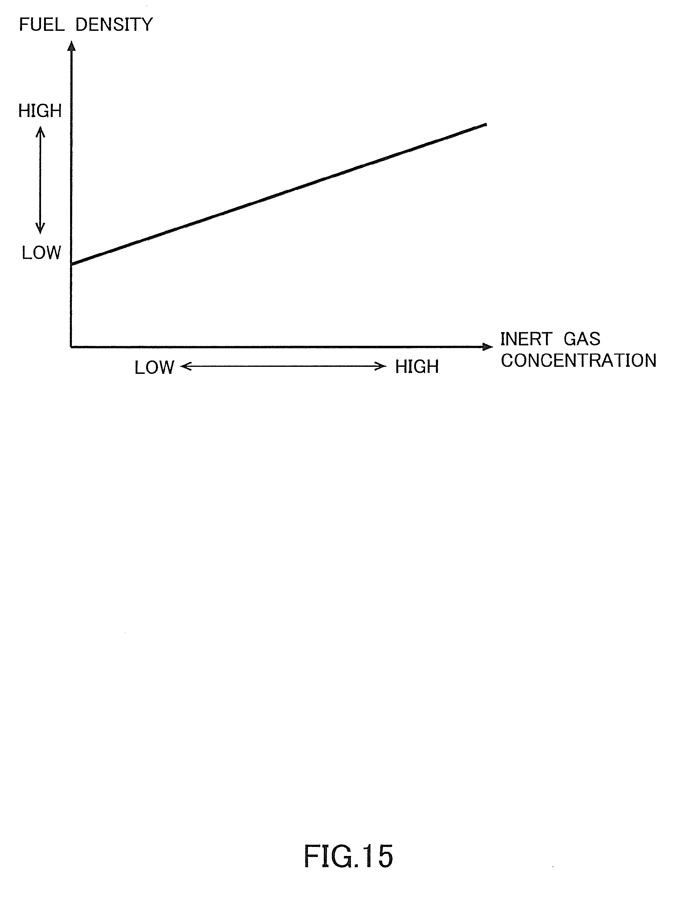

Next, a third embodiment of the present invention will be described with reference to Figs. 15 to 17. In the following, features different from those in the above-described second embodiment will be described, and like features will not be described.

In the above-described second embodiment, there has been described a method in which the inert gas concentration in CNG is determined using as a parameter the degree of opening (intermediate opening degree $\theta$) of the valve 510 in the regulator 56 at a time when CNG is injected through the first fuel injection valve 5. In this embodiment, there will be described a method in which the inert gas concentration in CNG is determined using as a parameter the length (duration) of the valve open period during which the valve 510 of the regulator 56 is open. The valve open period mentioned here is a period over which the valve 510 of the regulator 56 shifts from the fully open position to the fully closed position (i.e. period from t0 to t1 in Fig. 12 mentioned above) when the internal combustion engine 1 is started.

As shown in Fig. 15, the density of CNG is higher when the inert gas concentration in CNG is high than when it is low. Therefore, the higher the inert gas concentration in CNG is, the larger the degree of opening of the valve 510 (i.e. the opening area or the channel cross sectional area of the communication channel 503) needed to achieve the same volume flow rate is. In other words, if the degree of opening of the valve 510 is constant, the higher the density of CNG is, the lower the volume flow rate of CNG flowing through the regulator 56 is.

When the internal combustion engine 1 is started (or when the shut-off valve 55 is opened), the valve 510 in the regulator 56 shifts gradually from the fully open position to fully closed position with increase in the pressure in the first delivery pipe 50. Specifically, the degree of opening of the valve 510 decreases gradually during the period from the time at which the ignition switch is turned on to the time at which pressure in the first delivery pipe 50 reaches the set pressure.

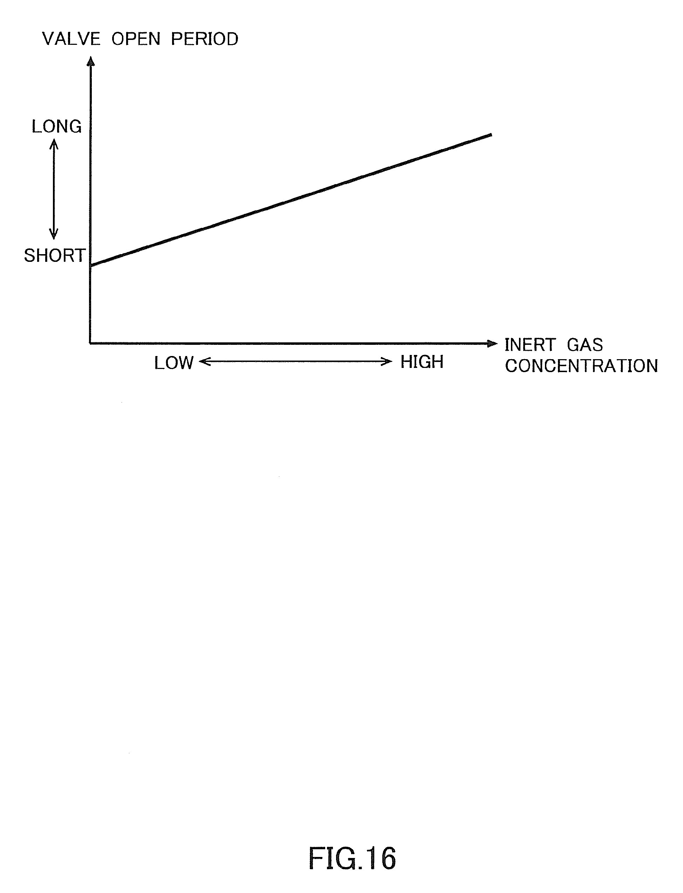

The quantity of CNG needed to increase the pressure in the first delivery pipe 50 to the set pressure is the same irrespective of the inert gas concentration in CNG. Therefore, the higher the inert gas concentration in CNG is, the larger the integrated value of the opening area of the communication channel 503 over the period over which the valve 510 shifts from the fully open position to the fully closed position is. Consequently, the higher the inert gas concentration is, the longer the valve open period of the valve 510 in the regulator 56 is, as shown in Fig. 16.

In this embodiment, the relationship between the valve open period and the inert gas concentration in CNG like that shown in Fig. 16 is determined in advance, and the inert gas concentration in CNG is calculated by measuring the length of the valve open period when the internal combustion engine 1 is started.

The length of the valve open period may be measured either by measuring the time elapsed from when the output signal of the lift sensor 520 indicates a first specific opening degree to when the output signal of the lift sensor 520 indicates a second specific opening degree or by measuring the time elapsed from when the shut-off valve 55 is opened to when the pressure in the first delivery pipe 50 becomes equal to the set pressure. The aforementioned first specific opening degree may be either the fully open state or an opening degree larger than the fully closed state and smaller than the fully open state. The aforementioned second specific opening degree may be either the fully closed state or an opening degree larger than the fully closed state and smaller than the first specific opening degree.

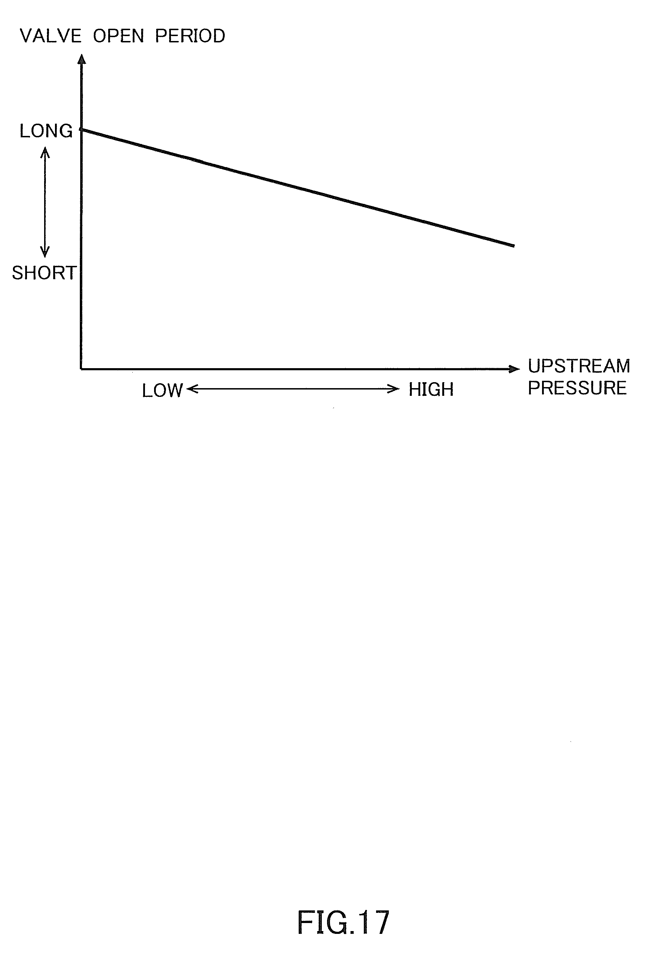

The length of the aforementioned valve open period changes with not only the inert gas concentration in CNG but also the pressure of CNG in the upstream of the regulator 56 (upstream pressure). For example, if the density of CNG is constant, the higher the upstream pressure is, the higher the volume flow rate of CNG flowing through the regulator is. In other words, if the inert gas concentration in CNG is constant, the higher the upstream pressure is, the shorter the valve open period is, as shown in Fig. 17.

Therefore, it is desirable for the ECU 7 to calculate the inert gas concentration in CNG using the correlation between the valve open period and the upstream pressure in addition to the correlation between the valve open period and the inert gas concentration in CNG. Specifically, the ECU 7 calculates a correction coefficient from the upstream pressure. The correction coefficient is an integer equal to or larger than 1. The higher the upstream pressure is, the larger the correction coefficient is set to be. Relationship between the correction coefficient and the upstream pressure may be determined in advance by experiments and stored in the ROM of the ECU 7 as a map. The ECU 7 may multiply the measured value of the valve open period by the above-mentioned correction coefficient and calculate the inert gas concentration from the result of this multiplication and the relationship shown in Fig. 16.

As the aforementioned upstream pressure, the output signal of the pressure sensor 57, or the output signal of the intake air temperature sensor or the outside air temperature sensor may be used as a value correlating with the upstream pressure.

If the inert gas concentration in CNG is determined by the above-described method, the values of the first threshold Thre1 and the second threshold Thre2 are adapted to the properties of CNG, even if the A/F sensor 41 is not active at the time when the internal combustion engine 1 is started for the first time after supply of CNG. Therefore, a reduction in the difference between the actual torque of the internal combustion engine 1 and the required torque and an enlargement of the operation range in which the first operation mode is used can be achieved, even when the A/F sensor 41 is not active.

The inert gas concentration in CNG may be calculated using as a parameter the decrease in the degree of opening of the valve 510 per unit time (i.e. valve closing speed) in the period over which the state of the valve 510 shifts from the fully open state to the fully closed state, the degree of opening of the valve 510 after a lapse of a predetermined time from the time when the degree of opening of the valve 510 starts to decrease (i.e. the time when the ignition switch is turned on), or the integrated value of the degree of opening of the valve 510 over the period over which the state of the valve 510 shifts from the fully open state to the fully closed state, instead of the length of the valve open period of the valve 510.

## <EMBODIMENT 4>

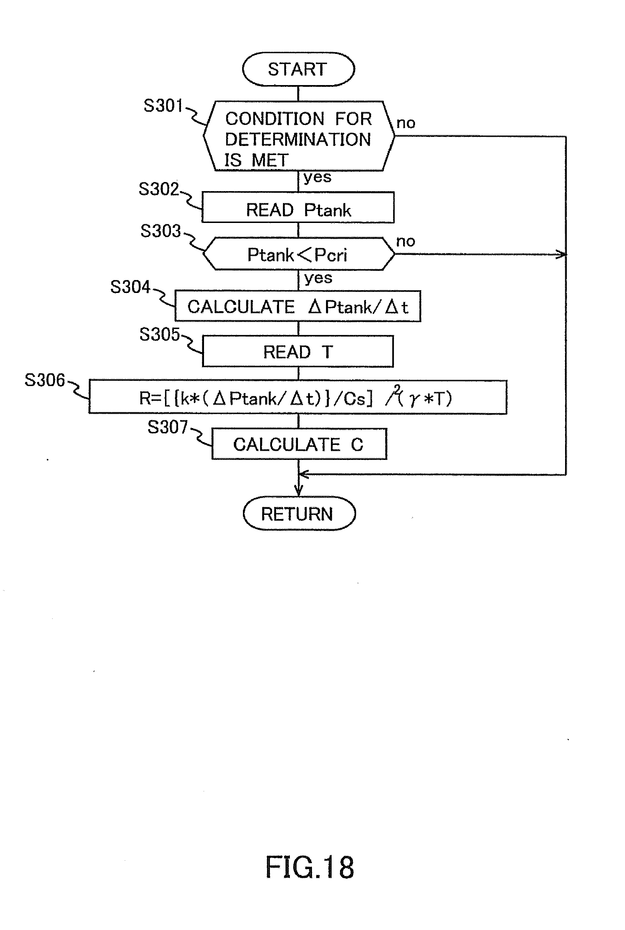

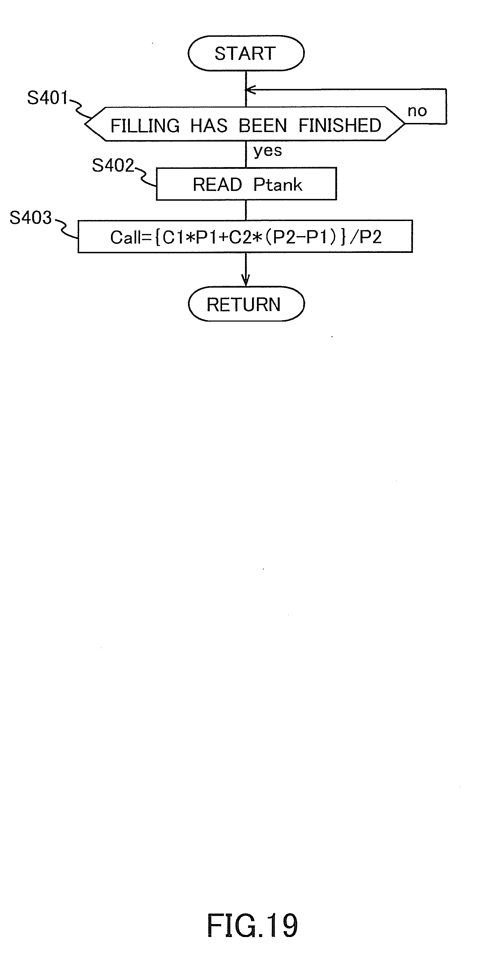

Next, a fourth embodiment of the present invention will be described with reference to Figs. 18 and 19. In the following, features different from those in the above-described first embodiment will be described, and like features will not be described.

The difference between the above-described first embodiment and this embodiment resides in the method of determining the inert gas concentration in CNG. In the above-described first embodiment, there has been described a method in which the inert gas concentration in CNG is determined using a correction value used in the air-fuel ratio feedback control (that is, the inert gas concentration learned value eknco2) as a parameter. In this embodiment, the gas constant of the filling CNG is calculated at the time of supply of the filling CNG, and the inert gas concentration in the mixed CNG is determined from the gas constant of the filling CNG.

In the following, a method of determining the inert gas concentration in the filling CNG will be described. The concentration of inert gases contained in a CNG correlates with the gas constant of the CNG. Therefore, it is possible to determine the inert gas concentration in the CNG by calculating the gas constant of the CNG.

It is known that the gas constant of CNG can be expressed by the following equation (4):

$$R = Ss^2 / (\gamma * T) \quad (4).$$

In the above equation (4), R is the gas constant, Ss is the sonic speed in the gas, $\gamma$ is the specific heat ratio of the gas, and T is the temperature of the gas.

The above equation (4) holds when the speed of the filling CNG flowing from the filler port 53 to the first fuel tank 52 is equal to or higher than the sonic speed. In other words, the above equation (4) holds when the speed of the filling CNG in the portion of the path from the filler port 53 to the first fuel tank 52 via the inlet pipe 54 in which the channel cross sectional area of the passage is smallest (this portion will be hereinafter referred to as the "smallest diameter portion") is equal to or higher than the sonic speed.

The speed of the filling CNG becomes equal to or higher than the sonic speed when the following condition is met; that is, the speed of the filling CNG becomes equal to or higher than the sonic speed when the ratio (Ptank/Pdis) of the pressure Ptank in the first fuel tank 52 immediately before filling with the filling CNG (or at the time when the filler port 53 is opened) and the dispensing pressure Pdis of the filling CNG dispensed through the filling nozzle is lower than a threshold Pthre (Ptank/Pdis < Pthre).

From the above follows that the above equation (4) holds when the pressure Ptank in the first fuel tank 52 immediately before filling with the filling CNG is lower than the product of the dispensing pressure Pdis of the filling nozzle and the threshold Pthre (Ptank < Pthre*Pdis).

The aforementioned threshold Pthre varies with the dispensing pressure of the filling nozzle and the channel cross sectional area of the passage in the smallest diameter portion. The dispensing pressure Pdis of the filling nozzle can be known beforehand using a statistical method. In this case, as the dispensing pressure Pdis, a value equal to the lowest dispensing pressure Pdismin among dispensing pressures Pdis obtained using a statistical method minus a margin may be employed. The channel cross sectional area of the passage in the smallest diameter portion can be determined in advance. Therefore, the product of the dispensing pressure Pdis and the threshold Pthre can be obtained in advance as a fixed value. (In the following, the above-mentioned product will be referred to as the "critical pressure Pcri".)

The ECU 7 calculates the gas constant R of the filling CNG according to equation (4) presented above when the pressure ptank in the first fuel tank 52 immediately before filling with the filling CNG is lower than the above-mentioned critical pressure Pcri. It is difficult to measure the sonic speed Ss of the filling CNG using an existing vehicle-mounted device. Therefore, the ECU 7 calculates the sonic speed Ss of the filling CNG by the following method.

The speed (sonic speed) Ss of the filling CNG can be expressed by the following equation (5):

$$Ss = Q/Cs \quad (5),$$

where Q is the quantity of the filling CNG supplied per unit time (i.e. flow rate), and Cs is the channel cross sectional area of the passage in the smallest diameter portion.

The flow rate Q of the filling CNG is proportional to the rise $\Delta$ptank in the pressure in the first fuel tank 52 per a specific time $\Delta$t. Hence the flow rate Q of the filling CNG can be expressed by the following equation (6):

$$Q = k*(\Delta Ptank/\Delta t) \quad (6),$$

where k is a coefficient, which is determined based on the volume of the first fuel tank 52 and other factors.

From the above equations (5) and (6), the sonic speed Ss of the filling CNG can be expressed by the following equation (7):

$$Ss = \{k*(\Delta Ptank/\Delta t)\}/Cs \quad (7).$$

From the above equations (4) and (7), the gas constant R can be expressed by the following equation (8):

$$R = [\{k*(\Delta Ptank/\Delta t)\}/Cs]^2/(\gamma*T) \quad (8).$$

The ECU 7 can calculate the gas constant R of the filing CNG from the above equation (8) when the value Ptank measured by the pressure sensor 57 (i.e. the pressure in the first fuel tank 52) immediately before filling with the filling CNG is lower than the aforementioned critical pressure Pcri.

As the specific heat ratio in the above equation (8), an adapted value determined based on the specific heat ratio of carbon dioxide ($CO_2$) (1.29), the specific heat ratio of nitrogen ($N_2$) (1.40), and the specific heat ratio of methane (1.31), which is the main component of the CNG, is used. For instance, the adapted value may be approximately 1.3. As the temperature T in the above equation (8), a value measured by the intake air temperature sensor or the outside air temperature sensor is used. In the case where a temperature sensor is attached to a passage running from the filler port 53 to the first fuel tank 52, a value measured by this temperature sensor may be used as the aforementioned temperature T.

If the gas constant R of the filling CNG is calculated by the above-described method, the gas constant R of the filling CNG can be determined immediately after filling with the filling CNG is finished. In consequence, it is also possible to determine the concentration of the inert gases contained in the filling CNG using the gas constant R of the filling CNG as a parameter. The relationship between the gas constant R and the inert gas concentration ought to be determined in advance by experiments. The relationship between the gas constant R and the inert gas concentration may be stored in the form of a map in the ROM of the ECU 7. Alternatively, it may be stored in the form of a function formula in the ROM of the ECU 7.

A process of determining the inert gas concentration in the filling CNG will be described with reference to Fig. 18. Fig. 18 is a flow chart of a processing routine executed by the ECU 7 to determine the inert gas concentration in the filling CNG.

In the processing routine shown in Fig. 18, the ECU 7 firstly determines, in step S301, whether or not a condition for determination of the inert gas concentration is met. The condition for determination mentioned above is a condition that is met, for example, when the internal combustion engine 1 is not running and a fuel lid covering the filler port 53 is open. If the determination made in step S301 is negative, the ECU 7 terminates the execution of this routine. On the other hand, if the determination made in step S301 is affirmative, the ECU 7 proceeds to

step S302.

In step S302, the ECU 7 reads a measurement value Ptank of the pressure sensor 57. The measurement value Ptank at this time represents the pressure in the first fuel tank 52 immediately before filling with the filling CNG.
In step S303, the ECU 7 determines whether or not the measurement value Ptank read in the above step S302 is smaller than the aforementioned critical pressure Pcri. If the determination made in step S303 is negative, the ECU 7 terminates the execution of this routine. On the other hand, if the determination made in step S303 is affirmative, the ECU 7 proceeds to step S304.
In step S304, the ECU 7 calculates the rise in the pressure in the first fuel tank 52 per a specific time $\Delta t$. For example, the ECU 7 reads a measurement value Ptank' of the pressure sensor 57 at the time when the specific time $\Delta t$ has elapsed since the time at which the measurement value Ptank of the pressure sensor 57 was read in step S302 and divides the difference $\Delta$Ptank between these values (= Ptank' - Ptank) by the specific time $\Delta t$.
In step S305, the ECU 7 reads temperature T of the filling CNG. In this step, the ECU 7 may read a measurement value of the intake air temperature sensor or the outside air temperature sensor as the temperature T of the filling CNG.
In step S306, the ECU 7 substitutes the value calculated in the above step S304 (= $\Delta$Ptank/$\Delta t$) and the temperature T measured in the above step S305 into the aforementioned equation (8) to calculate the gas constant R of the filing CNG.
In step S307, the ECU 7 calculates the inert gas concentration C in the filling CNG using the gas constant R calculated in the above step S306 as a parameter.
As described above, the calculation unit according to the present invention is implemented by the execution of the processing routine shown in Fig. 18 by the ECU 7. In consequence, it is possible to determine the inert gas concentration in the filling CNG promptly when filling with the filling CNG is finished.
Then, the ECU 7 calculates the inert gas concentration in the mixed CNG using the inert gas concentration in the filling CNG. Specifically, the ECU 7 calculates the inert gas concentration Call in the mixed CNG according to the following equation (9):

$$Call = \{C1*P1 + C2*(P2 - P1)\}/P2 \quad (9),$$

where C1 is the inert gas concentration in the remaining CNG, P1 is the pressure in the first fuel tank 52 immediately before filling with the filling CNG, C2 is the inert gas concentration in the filling CNG, and P2 is the pressure in the first fuel tank 52 at the time when filling with the filling CNG is finished.
The pressure in the first fuel tank 52 correlates with the quantity of CNG stored in the first fuel tank 52. Therefore, the value of P1 in the above equation (9) represents the quantity of remaining CNG, and the difference between P2 and P1 (= P2 - P1) represents the quantity of the filling CNG.
Now, a process of determining the inert gas concentration in the mixed CNG will be described with reference to Fig. 19. Fig. 19 is a flow chart of a processing routine executed by the ECU 7 to determine the inert gas concentration in the mixed CNG.
In the processing routine shown in Fig. 19, the ECU 7 firstly determines, in step S401, whether or not filling with the filling CNG has been finished. For example, the ECU 7 may determine that filling with the filling CNG has been finished when the increase in the measurement value of the pressure sensor 57 per unit time becomes lower than a predetermined lower limit value. Alternatively, the ECU 7 may determine that filling with the filling CNG has been finished on condition that the filler port 53 is closed or the fuel lid is closed. The "lower limit value" mentioned above is a value equal to a maximum rise in the pressure in the first fuel tank 52 during the period in which filling with the filling CNG is not performed plus a margin.
If the determination made in the above step S401 is negative, the ECU 7 executes the processing of step S401 repeatedly. On the other hand, if the determination made in the above step S401 is affirmative, the ECU 7 proceeds to step S402. In step S402, the ECU 7 reads a measurement value Ptank of the pressure sensor 57. The measurement value Ptank read in step S402 represents the pressure P2 in the first fuel tank 52 at the time when filling with the filling CNG is finished.
In step S403, the ECU 7 calculates the inert gas concentration Call in the mixed CNG by substituting the inert gas concentration C1 in the remaining CNG, the pressure P1 in the first fuel tank 52 immediately before filling with the filling CNG, the inert gas concentration C2 in the filling CNG, and the pressure P2 in the first fuel tank 52 at the time when filling with the filling CNG is finished into equation (9) presented above. In this process, the ECU 7 uses the measurement value Ptank read in step S302 in the processing routine shown in Fig. 18 as the pressure P1 in the first fuel tank 52 immediately before filling with the filling CNG. The ECU 7 also uses the inert gas concentration C calculated in step S307 in the processing routine shown in Fig. 18 as the inert gas concentration C2 of the filling CNG. Furthermore, the ECU 7 uses the measurement value Ptank read in the above step S402 as the pressure P2 in the first fuel tank 52 at the time when filling with the filling CNG is finished.

As described above, the inert gas concentration Call in the mixed CNG can be determined at the time when filling with the filling CNG is finished by executing the processing routine shown in Fig. 19 by the ECU 7. In consequence, when the internal combustion engine 1 is started for the first time after filling with the filling CNG, the ECU 7 can set values of the first threshold Thre1 and the second threshold Thre2 appropriate to the inert gas concentration Call of the mixed CNG.

**[DESCRIPTION OF THE REFERENCE SIGNS]**

| 1: | internal combustion engine |
| 2: | cylinder |
| 3: | intake passage |
| 4: | exhaust passage |
| 5: | first fuel injection valve |
| 6: | second fuel injection valve |
| 7: | ECU |
| 41: | A/F sensor |
| 50: | first delivery pipe |
| 51: | first fuel passage |
| 51a: | upstream fuel passage |
| 51b: | downstream fuel passage |
| 52: | first fuel tank |
| 53: | filler port |
| 54: | inlet pipe |
| 55: | shut-off valve |
| 56: | regulator |
| 57: | pressure sensor |
| 60: | second delivery pipe |
| 61: | second fuel passage |
| 62: | second fuel tank |
| 63: | fuel pump |
| 500: | housing |
| 501: | primary chamber |
| 502: | secondary chamber |
| 502a: | decompression chamber |
| 502b: | atmospheric chamber |
| 503: | communication channel |
| 510: | valve |
| 512: | diaphragm |
| 513: | spring retainer |
| 514: | coil spring |
| 520: | lift sensor |

**Claims**

1. A control system for a multifuel internal combustion engine, which controls switching between a first operation mode in which the internal combustion engine operates using only compressed natural gas and a second operation mode in which the internal combustion engine operates using at least one liquid fuel among compressed natural gas and liquid fuel, comprising:

   determination means for determining the concentration of inert gases contained in compressed natural gas; and
   changing means for changing a condition for switching between said first operation mode and said second operation mode in conjunction with the concentration of inert gases determined by said determination means.

2.  A control system for a multifuel internal combustion engine according to claim 1, wherein
    said condition for switching requires to cause the internal combustion engine to operate in the first operation mode when the required torque of the internal combustion engine is equal to or lower than a threshold and to cause the internal combustion engine to operate in the second operation mode when the required torque of the internal combustion engine is higher than the threshold, and
    said changing means makes the value of said threshold smaller when the concentration of inert gases determined by said determination means is high than when it is low.

3.  A control system for a multifuel internal combustion engine according to claim 2, wherein the threshold includes a first threshold to be compared with the required torque of the internal combustion engine when the operation mode is to be switched from said first operation mode to said second operation mode and a second threshold to be compared with the required torque of the internal combustion engine when the operation mode is to be switched from said second operation mode to said first operation mode, said first threshold being set larger than said second threshold.

4.  A control system for a multifuel internal combustion engine according to any one of claims 1 to 3, further comprising control means for performing air-fuel ratio feedback control to correct a fuel injection quantity on the basis of a difference between the air-fuel ratio of air-fuel mixture burned in the internal combustion engine and a target air-fuel ratio when the internal combustion engine is operating in said first operation mode, wherein said determination means calculates the concentration of inert gases contained in compressed natural gas using the magnitude of a correction value used in said air-fuel ratio feedback control as a parameter.

5.  A control system for a multifuel internal combustion engine according to any one of claims 1 to 3, further comprising:

    a fuel tank that stores compressed natural gas;
    a fuel injection valve that injects compressed natural gas into an intake passage or a cylinder;
    a regulator arranged in the middle of a fuel supply passage used to supply compressed natural gas to said fuel injection valve from said fuel tank, said regulator adjusting the channel cross sectional area of said fuel supply passage in such a way as to make the pressure of compressed natural gas supplied to said fuel injection valve equal to a set pressure; and
    measuring means for measuring the channel cross sectional area adjusted by said regulator when injection of compressed natural gas by said fuel injection valve is performed,
    wherein said determination means calculates the concentration of inert gases contained in compressed natural gas using the channel cross sectional area measured by said measuring means as a parameter.

6.  A control system for a multifuel internal combustion engine according to any one of claims 1 to 3, further comprising:

    a fuel tank that stores compressed natural gas;
    a fuel injection valve that injects compressed natural gas into an intake passage or a cylinder; and
    a regulator arranged in the middle of a fuel supply passage used to supply compressed natural gas to said fuel injection valve from said fuel tank, said regulator having a valve member that changes the channel cross sectional area of said fuel supply passage in such a way as to make the pressure of compressed natural gas supplied to said fuel injection valve equal to a set pressure,
    wherein said determination means calculates the concentration of inert gases contained in compressed natural gas on the basis of the length of a time period over which the opening degree of the valve member of said regulator decreases from a first predetermined opening degree to a second predetermined opening degree or a parameter correlating with the length of said time period.

7.  A control system for a multifuel internal combustion engine according to any one of claims 1 to 3, further comprising:

    a fuel tank for storing compressed natural gas;
    a filler port that is opened when compressed natural gas is supplied to said fuel tank;
    a pressure sensor that measures the pressure in said fuel tank; and
    a calculation unit that calculates, when new compressed natural gas is supplied to said fuel tank, the concentration of inert gases contained in the compressed natural gas newly supplied to said fuel tank using a change in the pressure measured by said pressure sensor and the channel cross sectional area of a fuel passage from said filler port to said fuel tank as parameters,

wherein said determination means calculates the concentration of inert gases contained in mixed fuel as a mixture of the compressed natural gas remaining in the fuel tank and the compressed natural gas newly supplied to the fuel tank using as parameters the quantity of compressed natural gas remaining in the fuel tank at the time when the new compressed natural gas is supplied to the fuel tank, the inert gas concentration in the compressed natural gas remaining in the fuel tank, the quantity of the compressed natural gas newly supplied to the fuel tank, and the inert gas concentration in the compressed natural gas newly supplied to the fuel tank.

FIG.1

EP 2 813 689 A1

FIG.2

FIG.3

THEORETICAL AIR-FUEL RATIO

FIG.4

INERT GAS CONCENTRATION

FIG.5

FIG.6

FIG.7

FIG.8

START

S201 — IG=ON —no→

yes

S202 — CALCULATE INERT GAS CONCENTRATION

S203 — CALCULATE Trq1max

S204 — Thre1←Trq1max−m

S205 — Thre2←Thre1−ΔTrq

② →

S206 — CALCULATE Trqtrg

S207 — FIRST OPERATION MODE —no→

yes

S208 — Trqtrg>Thre1 —no→

S209 — SWITCH TO SECOND OPERATION MODE

S210 — Trqtrg≦Thre2 —no→

yes

S211 — SWITCH TO FIRST OPERATION MODE

S212 — IG=OFF —no→ ②

yes

END

FIG.9

32

FIG.10

FIG.11

FIG.12

FIG.13

FIG.14

FIG.15

FIG.16

FIG.17

$$R = [[k * (\Delta Ptank / \Delta t)] / Cs]^2 (\gamma * T)$$

FIG.18

41

START

S401 — FILLING HAS BEEN FINISHED — no

yes

S402 — READ Ptank

S403 — $Call = \{C1*P1 + C2*(P2-P1)\}/P2$

RETURN

FIG.19

## INTERNATIONAL SEARCH REPORT

| International application No. |
|---|
| PCT/JP2012/052983 |

**A. CLASSIFICATION OF SUBJECT MATTER**
*F02D19/06*(2006.01)i

According to International Patent Classification (IPC) or to both national classification and IPC

**B. FIELDS SEARCHED**

Minimum documentation searched (classification system followed by classification symbols)
F02D19/06

Documentation searched other than minimum documentation to the extent that such documents are included in the fields searched
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-214568 A (Toyota Motor Corp.), 27 October 2011 (27.10.2011), claims 1 to 6 (Family: none) | 1-7 |
| A | JP 2008-57500 A (Toyota Motor Corp.), 13 March 2008 (13.03.2008), claims 1 to 7 (Family: none) | 1-7 |
| A | JP 2012-2172 A (Toyota Motor Corp.), 05 January 2012 (05.01.2012), claim 1 (Family: none) | 1-7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 March, 2012 (02.03.12) | 13 March, 2012 (13.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2012/052983 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-346911 A  (Toyota Motor Corp.), 09 December 2004 (09.12.2004), claim 1 (Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006342689 A